# EUROPEAN PATENT SPECIFICATION

(11) **EP 3 208 303 B1**
(45) Date of publication and mention of the grant of the patent: **19.02.2020**
(21) Application number: 15851502.3
(22) Date of filing: 16.10.2015
(51) Int. Cl.: C08L 9/06, B60C 1/00, C08C 19/00, C08G 61/08, C08K 3/36, C08K 5/54, C08L 15/00, C08L 65/00, C08K 3/22, C08F 4/14, C08K 5/548

(54) **RUBBER COMPOSITION FOR TIRE**
KAUTSCHUKZUSAMMENSETZUNG FÜR REIFEN
COMPOSITION DE CAOUTCHOUC POUR PNEUMATIQUE

(30) Priority: 17.10.2014 JP 2014212362; 31.03.2015 JP 2015072522
(43) Date of publication of application: 23.08.2017
(73) Proprietor: Zeon Corporation, Tokyo 100-8246 (JP)
(72) Inventor: KURAMOTO, Naoaki, Tokyo 100-8246 (JP); SUGIMURA, Takeshi, Tokyo 100-8246 (JP); OKUNO, Shingo, Tokyo 100-8246 (JP); NITADORI, Hiroyuki, Tokyo 100-8246 (JP)
(74) Representative: Maiwald Patent- und Rechtsanwaltsgesellschaft mbH
(86) International application number: PCT/JP2015/079373
(87) International publication number: WO 2016/060267

(56) References cited:
- EP-A1- 2 524 935
- EP-A1- 2 524 936
- WO-A1-03/102053
- WO-A1-2011/087072
- WO-A1-2013/008927
- WO-A1-2014/133028
- GB-A- 1 476 424
- JP-A- 2004 231 905
- JP-A- 2012 172 020
- JP-A- 2012 184 289
- US-A- 3 925 514
- US-A1- 2013 281 615

## Description

### TECHNICAL FIELD

The present invention relates to a rubber composition for a tire, more particularly relates to a rubber composition for a tire containing a cyclopentene ring-opening polymer and a solution polymerized styrene-butadiene rubber as claimed in claim 1, which can give a cross-linked rubber excellent in wet grip and low heat buildup property.

### BACKGROUND ART

Butadiene rubber or styrene-butadiene rubber is widely used as synthetic rubber for use as a material of a tire. While butadiene serving as a raw material of butadiene rubber or styrene-butadiene rubber is produced as a by-product in production of ethylene by cracking of naphtha, as a method for producing ethylene, a method where a natural gas such as ethane is used as a raw material has been recently extended and therefore a reduction in production volume of butadiene has been predicted. Therefore, there have been advanced various studies about use of synthetic rubber which is obtained without using butadiene as a raw material, as an alternative material of butadiene rubber or styrene-butadiene rubber.

As one synthetic rubber studied as the alternative material of butadiene rubber or styrene-butadiene rubber, a cyclopentene ring-opening polymer which is obtained by ring-opening polymerization of cyclopentene may be mentioned. For example, Patent Document 1 proposes a technique where cyclopentene is subjected to ring-opening polymerization in the presence of a compound having a functional group and an ethylenically unsaturated bond, thereby introducing the functional group to an end of a cyclopentene ring-opening polymer so as to improve affinity between the cyclopentene ring-opening polymer and an inorganic particle. Further, Patent Document 2 proposes a technique where an alkoxysilyl group is bonded to an end of a polymer chain via a urethane bound group to thereby improve affinity between a cyclopentene ring-opening polymer and an inorganic particle.

However, if considering the rising demands for safety from tires in recent years, for example, in a rubber composition using the cyclopentene ring-opening polymer specifically described in Patent Document 1 and Patent Document 2, the obtained cross-linked rubber have been sometimes insufficient in wet grip. Therefore, the rubber composition containing the cyclopentene ring-opening polymer has been demanded to be improved for giving a cross-linked rubber excellent in wet grip and low heat buildup property.

### RELATED ART

### PATENT DOCUMENTS

Patent Document 1: Japanese Patent Publication No. 2010-37362.
Patent Document 2: International Publication No. WO 2012/043802.
WO 2014/133028 A1 relates to a cyclopentene ring-opening copolymer used in a rubber composition for tires having excellent wet grip performance and low heat buildup, and a method for producing said copolymer.
EP 2 524 936 A1 relates to a ring-opening polymer of cyclopentene wherein a cis ratio of cyclopentene-derived structural units is 30% or more, the weight average molecular weight is 100,000 to 1,000,000, and an oxysilyl group is included at an end of the polymer chain.
EP 2 524 935 A1 relates to a ring-opening polymer of cyclopentene, wherein a cis ratio of the cyclopentene-derived structural units is 30% or more, a weight average molecular weight is 100,000 to 1,000,000, and a functional group of formula -Y-H (Y representing an oxygen or a sulfur atom) or -NH-Q (Q representing a hydrogen atom, a hydrocarbon group or a silyl group) is included at an end of the polymer chain.
US 2013/0281615 A1 relates to a cyclopentene ring-opening polymer which has structures at the polymer chain terminal ends where the polymer chains and groups including alkoxysilyl groups are bonded through urethane bond groups and which has a weight average molecular weight of 100,000 to 1,000,000.
US 3,925,514 relates to improving the green strength of a butadiene rubber by adding up to about 50 phr of a polycyclopentene having an LVN (limiting viscosity number) of at least 4 dl/g.
GB 1 476 424 relates to a butadiene rubber composition having improved green strength comprising a butadiene rubber and a high molecular weight polycyclopentene having an LVN of at least 4 dl/g, the amount of said polycyclopentene not exceeding 50 phr.

### SUMMARY OF THE INVENTION

### PROBLEM TO BE SOLVED BY THE INVENTION

An object of the present invention is to provide a rubber composition for a tire containing a cyclopentene ring-opening polymer, which can give a cross-linked rubber excellent in wet grip and low heat buildup property.

### MEANS FOR SOLVING THE PROBLEM

The inventors engaged in intensive research to achieve the above object and as a result discovered that a cross-linked rubber excellent in wet grip and low heat buildup property is obtained by cross-linking a rubber composition obtained by addition of a modified solution polymerized styrene-butadiene rubber to a cyclopentene ring-opening polymer. The present invention was completed based on this discovery.

That is, according to the present invention, there is provided a rubber composition for a tire, comprising a cyclopentene ring-opening polymer and a solution polymerized styrene-butadiene rubber, wherein the solution polymerized styrene-butadiene rubber is a modified solution polymerized styrene-butadiene rubber in which a hydroxyl group or an amino group is introduced as a modified group.

In the above rubber composition for a tire, an amount of bonded styrene in the solution polymerized styrene-butadiene rubber is preferably 5 wt% or more and 50 wt% or less, more preferably 5 wt% or more and 30 wt% or less.

In the above rubber composition for a tire, a content ratio of the cyclopentene ring-opening polymer and the solution polymerized styrene-butadiene rubber in terms of a weight ratio of (cyclopentene ring-opening polymer : solution polymerized styrene-butadiene rubber) is preferably 5:95 to 90:10.

In the above rubber composition for a tire, the cyclopentene ring-opening polymer preferably includes an end functional group-containing cyclopentene ring-opening polymer in which a functional group is introduced to an end of a polymer chain.

In the above rubber composition for a tire, the end functional group-containing cyclopentene ring-opening polymer preferably contains an oxysilyl group as the functional group at an end of a polymer chain.

In the above rubber composition for a tire, the solution polymerized styrene-butadiene rubber is a modified solution polymerized styrene-butadiene rubber in which a hydroxyl group or an amino group is introduced as a modified group.

In the above rubber composition for a tire, the solution polymerized styrene-butadiene rubber is preferably a modified solution polymerized styrene-butadiene rubber having a group introduced by a reaction of at least one of the compounds represented by the following general formulas (1) to (3) with a polymer chain of a solution polymerized styrene-butadiene copolymer having an active end: 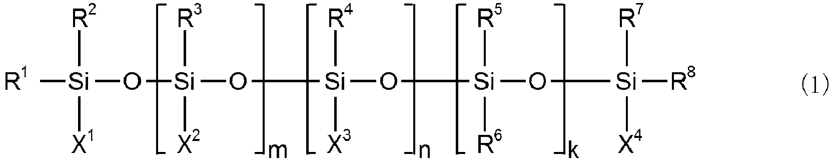 where, in the above general formula (1), each of R¹ to R⁸ represents an alkyl group having 1 to 6 carbon atoms or an aryl group having 6 to 12 carbon atoms, and R¹ to R⁸ may be the same as or different from each other; each of X¹ and X⁴ represents a functional group able to react with the active end of the polymer chain, an alkyl group having 1 to 6 carbon atoms, or an aryl group having 6 to 12 carbon atoms, and X¹ and X⁴ may be the same as or different from each other; X² represents a functional group able to react with the active end of the polymer chain; X³ represents a group containing 2 to 20 alkyleneglycol repeating units; and "m" is an integer of 3 to 200, "n" is an integer of 0 to 200, and "k" is an integer of 0 to 200; 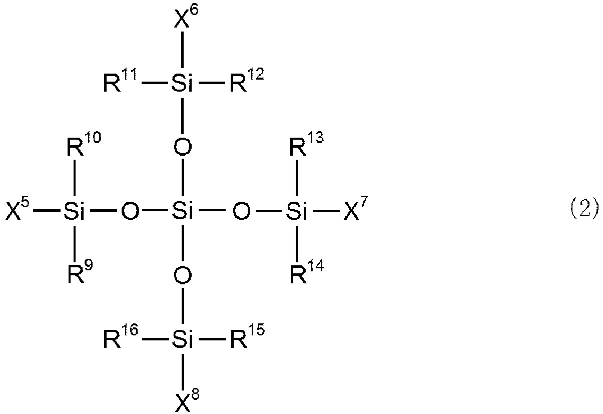 where, in the above general formula (2), each of R⁹ to R¹⁶ represents an alkyl group having 1 to 6 carbon atoms or an aryl group having 6 to 12 carbon atoms, and R⁹ to R¹⁶ may be the same as or different from each other; and each of X⁵ to X⁸ represents a functional group able to react with the active end of the polymer chain; 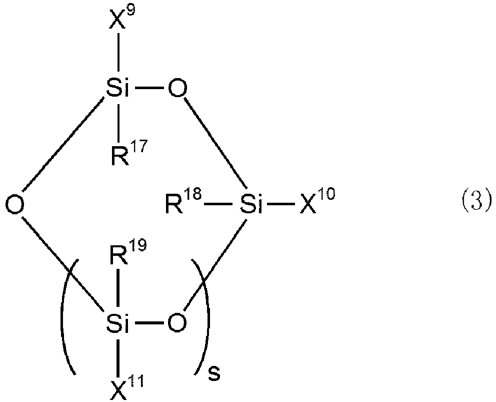 where, in the above general formula (3), each of R¹⁷ to R¹⁹ represents an alkyl group having 1 to 6 carbon atoms or an aryl group having 6 to 12 carbon atoms, and R¹⁷ to R¹⁹ may be the same as or different from each other; each of X⁹ to X¹¹ represents a functional group able to react with the active end of the polymer chain; and "s" is an integer of 1 to 18.

The above rubber composition for a tire preferably further comprises a silica in a ratio of 1 part by weight or more and 200 parts by weight or less with respect to 100 parts by weight of a rubber component contained in the rubber composition for a tire.

The above rubber composition for a tire preferably further comprises a silane coupling agent in a ratio of 0.1 part by weight or more and 30 parts by weight or less with respect to 100 parts by weight of the silica. The silane coupling agent is more preferably a silane coupling agent including a monosulfide group and/or a thiol group.

In the above rubber composition for a tire, it is preferable that the cyclopentene ring-opening polymer is an end functional group-containing cyclopentene ring-opening polymer in which a functional group is introduced to an end of a polymer chain, an amount of bonded styrene in the solution polymerized styrene-butadiene rubber is 5 to 35 wt%, and, in a rubber component contained in the rubber composition for a tire, a content ratio of the end functional group-containing cyclopentene ring-opening polymer is 10 to 55 wt% and a content ratio of the solution polymerized styrene-butadiene rubber is 30 to 75 wt%.

The above rubber composition for a tire preferably further comprises at least one rubber selected from natural rubber, polyisoprene rubber and polybutadiene rubber.

The above rubber composition for a tire preferably further comprises a silica in a ratio of 30 to 200 parts by weight with respect to 100 parts by weight of the rubber component contained in the rubber composition for a tire.

In the above rubber composition for a tire, a nitrogen adsorption specific surface area of the silica, measured by a BET method, is preferably 100 m²/g or less.

In the above rubber composition for a tire, the end functional group-containing cyclopentene ring-opening polymer preferably contains an oxysilyl group as the functional group at an end of a polymer chain.

Further, according to the present invention, there are provided a cross-linked rubber obtained by cross-linking the above-described rubber composition for a tire, and a tire comprising this cross-linked rubber.

### EFFECTS OF INVENTION

According to the present invention, there is provided a rubber composition for a tire as claimed in claim 1, containing a cyclopentene ring-opening polymer and a solution polymerized styrene-butadiene rubber, wherein the solution polymerized styrene-butadiene rubber is a modified solution polymerized styrene-butadiene rubber in which a hydroxyl group or an amino group is introduced as a modified group, which can give a cross-linked rubber excellent in wet grip and low heat buildup property.

### DESCRIPTION OF EMBODIMENTS

The rubber composition for a tire of the present invention is a rubber composition containing a cyclopentene ring-opening polymer and a solution polymerized styrene-butadiene rubber, wherein the solution polymerized styrene-butadiene rubber is a modified solution polymerized styrene-butadiene rubber in which a hydroxyl group or an amino group is introduced as a modified group.

In the rubber composition for a tire of the present invention, the cyclopentene ring-opening polymer contained as an essential component is a polymer containing repeating units obtained by ring-opening polymerization of cyclopentene, as the repeating units forming the main chain. The cyclopentene ring-opening polymer may be a polymer where the repeating units forming the main chain are comprised of only repeating units obtained by ring-opening polymerization of cyclopentene, but it may also contain repeating units derived from another monomer able to be copolymerized with cyclopentene. From the viewpoint of improving the properties of the cyclopentene ring-opening polymer, however, the ratio of repeating units derived from such another monomer is preferably 20 mol% or less with respect to the total repeating units, more preferably 15 mol% or less, further preferably 10 mol% or less. As such another monomer able to be copolymerized with cyclopentene, a monocycloolefin other than cyclopentene, a monocyclodiene, a monocyclotriene, a polycyclic cycloolefin, a polycyclic cyclodiene, a polycyclic cyclotriene, etc. may be mentioned. As the monocycloolefin other than cyclopentene, substituted cyclopentene and substituted or unsubstituted cyclooctene may be illustrated. As the monocyclodiene, substituted or unsubstituted 1,5-cyclooctadiene may be illustrated. As the monocyclotriene, substituted or unsubstituted 1,5,9-cyclododecatriene may be illustrated. Further, as the polycyclic cycloolefin, a substituted or unsubstituted norbornene compound may be illustrated.

The molecular weight of the cyclopentene ring-opening polymer is not particularly limited, but the value of the weight average molecular weight (Mw), converted to polystyrene, measured by gel permeation chromatography is preferably 100,000 to 1,000,000, more preferably 150,000 to 900,000, further preferably 200,000 to 800,000. By the cyclopentene ring-opening polymer having such a molecular weight, a cross-linked rubber having excellent mechanical properties can be given.

The ratio (Mw/Mn) of the number average molecular weight (Mn) and the weight average molecular weight (Mw), converted to polystyrene, measured by gel permeation chromatography, of the cyclopentene ring-opening polymer is not particularly limited, but is usually 4.0 or less, preferably 3.5 or less, more preferably 3.0 or less. By having such an Mw/Mn, a cross-linked rubber having excellent mechanical properties can be given.

In the double bonds present in the repeating units forming the cyclopentene ring-opening polymer, the cis/trans ratio is not particularly limited, but it is usually set to 10/90 to 90/10 in range. From the viewpoint of obtaining a rubber composition for a tire, which can give a cross-linked rubber exhibiting excellent characteristics at a low temperature, and a rubber composition for a tire, which can give a cross-linked rubber excellent in wet grip, 30/70 to 90/10 in range is preferable and 40/60 to 90/10 in range is more preferable.

The glass transition temperature of the cyclopentene ring-opening polymer is not particularly limited, but it is preferably -90°C or less, more preferably -98°C or less, further preferably -99°C or less, particularly preferably -100°C or less from the viewpoint of obtaining a rubber composition for a tire, which can give a cross-linked rubber exhibiting excellent characteristics at a low temperature. Further, the lower limit of the glass transition temperature of the cyclopentene ring-opening polymer is not particularly limited, but it is preferably -120°C or more, more preferably -117°C or more, further preferably -116°C or more, particularly preferably -115°C or more. The glass transition temperature of the cyclopentene ring-opening polymer can be modulated by modulating the cis/trans ratio in the double bonds present in the repeating units, etc.

The cyclopentene ring-opening polymer may have a melting point. When the cyclopentene ring-opening polymer has a melting point, the melting point is preferably 0°C or less, more preferably -10°C or less. The presence or absence of the melting point of the cyclopentene ring-opening polymer, and the melting point, if present, can be modulated by modulating the cis/trans ratio in the double bonds present in the repeating units, etc.

The cyclopentene ring-opening polymer may be a polymer where the molecular structure is comprised only of carbon atoms and hydrogen atoms, but the molecular structure preferably contains any atom other than carbon atoms and hydrogen atoms, in particular, preferably has a functional group containing any atom selected from the group consisting of atoms of Group XV of the Periodic Table, atoms of Group XVI of the Periodic Table, and a silicon atom from the viewpoints of improving the affinity between an inorganic particle usually compounded to the rubber composition for a tire, such as silica and carbon black, and the cyclopentene ring-opening polymer so as to allow the obtained cross-linked rubber to be excellent in wet grip and low heat buildup property.

From the viewpoint of particularly improving the affinity between the cyclopentene ring-opening polymer and the inorganic particle, as a specific example of a particularly suitable functional group, a functional group containing any atom selected from the group consisting of a nitrogen atom, oxygen atom, phosphorus atom, sulfur atom and silicon atom may be illustrated. Among these, a functional group containing any atom selected from the group consisting of a nitrogen atom, oxygen atom and silicon atom is further suitable.

As the functional group containing a nitrogen atom, an amino group, a pyridyl group, an imino group, an amide group, a nitro group, a urethane bound group, or a hydrocarbon group including such any group may be illustrated. As the functional group containing an oxygen atom, a hydroxyl group, a carboxylic acid group, an ether group, an ester group, a carbonyl group, an aldehyde group, an epoxy group, or a hydrocarbon group including such any group may be illustrated. As the functional group containing a silicon atom, an alkylsilyl group, an oxysilyl group, or a hydrocarbon group including such any group may be illustrated. As the functional group containing a phosphorus atom, a phosphoric acid group, a phosphino group, or a hydrocarbon group including such any group may be illustrated. As the functional group containing a sulfur atom, a sulfonyl group, a thiol group, a thioether group, or a hydrocarbon group including such any group may be illustrated. Further, the functional group may be a functional group containing a plurality of the above groups. From the viewpoint of further improving the affinity between the cyclopentene ring-opening polymer and the inorganic particle, as a specific example of a particularly suitable functional group, an amino group, a pyridyl group, an imino group, an amide group, a hydroxyl group, a carboxylic acid group, an aldehyde group, an epoxy group, an oxysilyl group, or a hydrocarbon group including such any group may be mentioned.

When the cyclopentene ring-opening polymer has a functional group containing any atom selected from the group consisting of atoms of Group XV of the Periodic Table, atoms of Group XVI of the Periodic Table, and a silicon atom, the position of the functional group is not particularly limited, but the functional group is preferably at an end of a polymer chain from the viewpoint of allowing the obtained cross-linked rubber to be excellent in wet grip and low heat buildup property. That is, the cyclopentene ring-opening polymer used in the present invention is preferably an end functional group-containing cyclopentene ring-opening polymer having a functional group at an end of a polymer chain.

When the functional group (modified group) is contained at an end of a polymer chain of the cyclopentene ring-opening polymer to become the end functional group-containing cyclopentene ring-opening polymer, the cyclopentene ring-opening polymer may be one in which the functional group is introduced to only one polymer chain end (single end), or may be one in which the functional group is introduced to both polymer chain ends (bot ends), or these may be mixed. Furthermore, these may be mixed with a cyclopentene ring-opening polymer in which no specific functional group is introduced to a polymer chain end.

When the functional group is contained at an end of a polymer chain of the cyclopentene ring-opening polymer to become the end functional group-containing cyclopentene ring-opening polymer, the ratio of introduction of the functional group (modified group) to the polymer chain end is not particularly limited, but the value of the percentage of number of cyclopentene ring-opening polymer ends in which the functional group (modified group) is introduced/total number of cyclopentene ring-opening polymer chain ends is preferably 10% or more, more preferably 15% or more, preferably 20% or more. The higher the ratio of introduction of the functional group (modified group) is, the higher the affinity with silica is. Thus, the wet grip and the low heat buildup property of the obtained cross-linked rubber can be enhanced. Note that, the method of measuring the ratio of introduction of the functional group (modified group) to the polymer chain end is not particularly limited, but the ratio can be determined from, for example, the peak area ratio relative to the functional group determined by ¹H-NMR spectroscopy, and the number average molecular weight determined by gel permeation chromatography.

The synthesis method of the cyclopentene ring-opening polymer is not particularly limited as long as the intended cyclopentene ring-opening polymer is obtained, and such a polymer may be synthesized by an ordinary method. From the viewpoint of obtaining a rubber composition for a tire, which can give a cross-linked rubber exhibiting excellent characteristics at a low temperature, a synthesis method example of a cyclopentene ring-opening polymer able to be suitably used is described below.

That is, the cyclopentene ring-opening polymer used in the present invention can be obtained by ring-opening polymerization of the cyclopentene in the presence of a polymerization catalyst including a transition metal compound (A) of Group VI of the Periodic Table and a organoaluminum compound (B) represented by the following general formula (4) .

(R²¹)₃₋ₚAl(OR²²)ₚ (4)

where, in the formula (4), each of R²¹ and R²² represents a hydrocarbon group having 1 to 20 carbon atoms, and "p" is 0<p<3.

The transition metal compound (A) of Group VI of the Periodic Table is a compound having a transition metal atom of Group VI of the Periodic Table (Long-Period Periodic Table, the same applies to the following), specifically, a compound having a chromium atom, a molybdenum atom or a tungsten atom, preferably a compound having a molybdenum atom, or a compound having a tungsten atom, in particular, more preferably a compound having a tungsten atom from the viewpoint of having a high solubility in the cyclopentene. Further, the transition metal compound (A) of Group VI of the Periodic Table may be a compound having any transition metal atom of Group VI of the Periodic Table and is not particularly limited, but halide, alcoholate, arylate, oxylate, etc. of any transition metal atom of Group VI of the Periodic Table may be illustrated. Among these, halide is preferable from the viewpoint of having a high polymerization activity.

As specific examples of such a transition metal compound (A) of Group VI of the Periodic Table, a molybdenum compound such as molybdenum pentachloride, molybdenum oxotetrachloride and molybdenum (phenylimide)tetrachloride; a tungsten compound such as tungsten hexachloride, tungsten oxotetrachloride, tungsten (phenylimide)tetrachloride, monocatecholate tungsten tetrachloride, bis(3,5-di-tert-butyl)catecholate tungsten dichloride, bis(2-chloroetherate)tetrachloride and tungsten oxotetraphenolate; may be mentioned.

The amount of use of the transition metal compound (A) of Group VI of the Periodic Table in terms of the molar ratio of "transition metal atom of Group VI in the polymerization catalyst : the cyclopentene" is usually 1:100 to 1:200,000, preferably 1:200 to 1:150,000, more preferably 1:500 to 1:100,000 in range. If the amount of use of the transition metal compound (A) of Group VI of the Periodic Table is too small, sometimes the polymerization reaction will not sufficiently proceed. On the other hand, if too large, removal of the catalyst residue from the cyclopentene ring-opening polymer will become difficult.

The organoaluminum compound (B) is the compound represented by the above general formula (4). As specific examples of the hydrocarbon group having 1 to 20 carbon atoms represented by R²¹ and R²² in the general formula (4), an alkyl group such as methyl group, ethyl group, isopropyl group, n-propyl group, isobutyl group, n-butyl group, t-butyl group, n-hexyl group and cyclohexyl group; an aryl group such as phenyl group, 4-methylphenyl group, 2,6-dimethylphenyl group, 2,6-diisopropylphenyl group and naphthyl group; etc. may be mentioned. Note that, the groups represented by R²¹ and R²² in the compound represented by the general formula (4) may be the same or may be different, but from the viewpoint that the cis ratio of the obtained cyclopentene ring-opening polymer can be raised, in the present invention, at least R²² of R²¹ and R²² preferably represents an alkyl group having 4 or more carbon atoms consecutively bonded together, particularly more preferably n-butyl group, 2-methyl-pentyl group, n-hexyl group, cyclohexyl group, n-octyl group or n-decyl group.

In the above general formula (4), "p" is 0<p<3. That is, in the above general formula (4), the compositional ratio of R²¹ and OR²² can be any value in each range of 0<3-p<3 and 0<p<3, but "p" is preferably 0.5<p<1.5 from the viewpoint that the polymerization activity can be increased and also the cis ratio of the obtained cyclopentene ring-opening polymer can be increased.

The organoaluminum compound (B) represented by the above general formula (4) can be synthesized by, for example, a reaction of trialkyl aluminum and alcohol as shown in the following general formula (5) .

(R²¹)₃Al+pR²²OH → (R²¹)₃₋ₚAl(OR²²)ₚ+(R²¹)ₚH (5)

Note that, in the above general formula (4), "p" can be arbitrarily controlled by defining the reaction ratio of corresponding trialkyl aluminum and alcohol as shown in the above general formula (5).

The amount of use of the organoaluminum compound (B) is preferably 0.1 to 100 times by mole with respect to the transition metal atom of Group VI of the Periodic Table forming the transition metal compound (A) of Group VI of the Periodic Table, more preferably 0.2 to 50 times by mole, further preferably 0.5 to 20 times by mole, but varies depending on the type of the organoaluminum compound (B) which is used. If the amount of use of the organoaluminum compound (B) is too small, sometimes the polymerization activity will be insufficient, and if too large, a side reaction tends to occur during ring-opening polymerization.

When using the polymerization catalyst including the transition metal compound (A) of Group VI of the Periodic Table and the organoaluminum compound (B) represented by the general formula (4), the polymerization catalyst may further contain, in addition to these components, esters and/or ethers (C).

As specific examples of the esters and/or ethers (C), ethers such as diethyl ether, tetrahydrofuran, ethyleneglycol diethyl ether and 1,4-dioxane; esters such as ethyl acetate, butyl acetate, amyl acetate, octyl acetate, 2-chloroethyl acetate, methyl acetylacrylate, ε-caprolactone, dimethyl glutarate, σ-hexanolactone and diacetoxyethane; etc. may be mentioned. Among these, 1,4-dioxane and ethyl acetate are preferable from the viewpoint that the effect of addition can be more increased. Such esters and/or ethers (C) may be used respectively alone or as two types or more combined.

Ring-opening polymerization of the cyclopentene can be performed by using the polymerization catalyst including the transition metal compound (A) of Group VI of the Periodic Table and the organoaluminum compound (B), as well as the esters and/or ethers (C) used in accordance with need, and bringing them into contact with the cyclopentene. The method of performing such ring-opening polymerization is not particularly limited, but for example, the method of performing ring-opening polymerization of the cyclopentene by addition of the transition metal compound (A) of Group VI of the Periodic Table in the presence of the cyclopentene and the organoaluminum compound (B), and the esters and/or ethers (C) used in accordance with need may be mentioned. Alternatively, ring-opening polymerization of the cyclopentene may be performed by mixing the transition metal compound (A) of Group VI of the Periodic Table and the esters or ethers (C) used in accordance with need, in advance, and adding thereto the cyclopentene and then the organoaluminum compound (B). Furthermore, ring-opening polymerization of the cyclopentene may be performed by mixing the transition metal compound (A) of Group VI of the Periodic Table and the organoaluminum compound (B), and, in accordance with need, the esters and/or ethers (C) in advance, and adding thereto the cyclopentene.

The ring-opening polymerization reaction may be performed in no solvent or in a solution. When the ring-opening polymerization reaction is performed in a solution, the solvent here used is not particularly limited as long as it is inert in the polymerization reaction and can dissolve the cyclopentane and the other copolymerizable cycloolefin used in ring-opening polymerization and the above polymerization catalyst, but, for example, a hydrocarbon-based solvent or a halogen-based solvent may be mentioned. As specific examples of the hydrocarbon-based solvent, for example, aromatic hydrocarbon such as benzene, toluene, xylene and ethylbenzene; aliphatic hydrocarbon such as n-hexane, n-heptane and n-octane; alicyclic hydrocarbon such as cyclohexane, cyclopentane and methylcyclohexane; etc. may be mentioned. As specific examples of the halogen-based solvent, alkyl halogen such as dichloromethane and chloroform; aromatic halogen such as chlorobenzene and dichlorobenzene; etc. may be mentioned.

A compound having a functional group and having one olefinic carbon-carbon double bond having metathesis reactivity may be present in the polymerization reaction system of the ring-opening polymerization reaction, to thereby introduce a functional group to a polymer chain end of the cyclopentene ring-opening polymer and to obtain, as the obtained cyclopentene ring-opening polymer, the end functional group-containing cyclopentene ring-opening polymer. For example, when an oxysilyl group is demanded to be introduced to a polymer chain end of the cyclopentene ring-opening polymer, an oxysilyl group-containing olefinically unsaturated hydrocarbon may be present in the polymerization reaction system.

With respect to examples of such an oxysilyl group-containing olefinically unsaturated hydrocarbon, as a compound which is able to introduce the functional group to only one polymer chain end (single end) of the cyclopentene ring-opening polymer, an alkoxysilane compound such as vinyl(trimethoxy)silane, vinyl(triethoxy)silane, allyl(trimethoxy)silane, allyl(methoxy)(dimethyl)silane, allyl(triethoxy)silane, allyl(ethoxy)(dimethyl)silane, styryl(trimethoxy)silane, styryl(triethoxy)silane, 2-styrylethyl(triethoxy)silane, allyl(triethoxysilylmethyl)ether and allyl(triethoxysilylmethyl)(ethyl)amine; an aryloxysilane compound such as vinyl(triphenoxy)silane, allyl(triphenoxy)silane and allyl(phenoxy)(dimethyl)silane; an acyloxysilane compound such as vinyl(triacetoxy)silane, allyl(triacetoxy)silane, allyl(diacetoxy)methylsilane and allyl(acetoxy)(dimethyl)silane; an alkylsiloxysilane compound such as allyltris(trimethylsiloxy)silane; an arylsiloxysilane compound such as allyltris(triphenylsiloxy)silane; a polysiloxane compound such as 1-allylheptamethyltrisiloxane, 1-allylnonamethyltetrasiloxane, 1-allylnonamethylcyclopentasiloxane and 1-allylundecamethylcyclohexasiloxane; etc. may be mentioned. As a compound which is able to introduce the functional groups to both polymer chain ends (both ends) of the cyclopentene ring-opening polymer, an alkoxysilane compound such as 1,4-bis(trimethoxysilyl)-2-butene, 1,4-bis(triethoxysilyl)-2-butene and 1,4-bis(trimethoxysilylmethoxy)-2-butene; an aryloxysilane compound such as 1,4-bis(triphenoxysilyl)-2-butene; an acyloxysilane compound such as 1,4-bis(triacetoxysilyl)-2-butene; an alkylsiloxysilane compound such as 1,4-bis[tris(trimethylsiloxy)silyl]-2-butene; an arylsiloxysilane compound such as 1,4-bis[tris(triphenylsiloxy)silyl]-2-butene; a polysiloxane compound such as 1,4-bis(heptamethyltrisiloxy)-2-butene and 1,4-bis(undecamethylcyclohexasiloxy)-2-butene; etc. may be mentioned.

The amount of use of the functional group-containing olefinically unsaturated hydrocarbon such as the oxysilyl group-containing olefinically unsaturated hydrocarbon may be appropriately selected depending on the molecular weight of the end functional group-containing cyclopentene ring-opening polymer to be produced, but is usually 1/100 to 1/100,000 as the molar ratio with respect to the cyclopentene, preferably 1/200 to 1/50,000, more preferably 1/500 to 1/10,000 in range. Note that, the functional group-containing olefinically unsaturated hydrocarbon not only serves to introduce the functional group to a polymer chain end of the cyclopentene ring-opening polymer, but also acts as a molecular weight adjuster.

When introduction of the functional group to the cyclopentene ring-opening polymer does not need, in order to adjust the molecular weight of the obtained cyclopentene ring-opening polymer, an olefin compound such as 1-butene, 1-pentene, 1-hexene and 1-octene or a diolefin compound such as 1,4-pentadiene, 1,4-hexadiene, 1,6-heptadiene, 2-methyl-1,4-pentadiene, 2,5-dimethyl-1,5-hexadiene, as a molecular weight adjuster, is used to be added to the polymerization reaction system. The amount of use of the molecular weight adjuster is suitably selected in the range same as that in the functional group-containing olefinically unsaturated hydrocarbon.

The polymerization reaction temperature is not particularly limited, but is preferably -100°C or more, more preferably -50°C or more, further preferably 0°C or more, particularly preferably 20°C or more. The upper limit of the polymerization reaction temperature is not particularly limited, but is preferably less than 100°C, more preferably less than 90°C, further preferably less than 80°C, particularly preferably less than 70°C. The polymerization reaction time is also not particularly limited, but is preferably 1 minute to 72 hours, more preferably 10 minutes to 20 hours.

To the cyclopentene ring-opening polymer obtained by the polymerization reaction, an antioxidant such as a phenol-based stabilizer, a phosphorus-based stabilizer, and a sulfur-based stabilizer may be added, as desired. The amount of the antioxidant added may be suitably selected in accordance with the type, etc. Further, extension oil may be compounded thereto, as desired. When the cyclopentene ring-opening polymer is obtained as a polymer solution, a known recovery method may be employed for recovering the polymer from the polymer solution. For example, the method of using steam stripping etc. to separate the solvent, then separating a solid by filtration and further drying it to obtain solid state rubber may be employed.

The rubber composition for a tire of the present invention contains, in addition to the cyclopentene ring-opening polymer, for example, which can be obtained as above, solution polymerized styrene-butadiene rubber. The solution polymerized styrene-butadiene rubber contained as an essential component in the rubber composition for a tire of the present invention is synthetic rubber obtained by polymerizing a monomer mixture containing styrene and butadiene as main components, in the state where the mixture is dissolved in a solvent. In the rubber composition for a tire of the present invention, by using the solution polymerized styrene-butadiene rubber obtained by a solution polymerization method combined with the cyclopentene ring-opening polymer, a cross-linked rubber excellent in wet grip and low heat buildup property can be given. Note that, when emulsion polymerized styrene-butadiene rubber is used instead of the solution polymerized styrene-butadiene rubber, such an improvement effect of wet grip and low heat buildup property cannot be achieved.

The amount of bonded styrene (weight ratio of the styrene units with respect to the total monomer units) in the solution polymerized styrene-butadiene rubber is not particularly limited, but it is preferably 5 wt% or more, more preferably 10 wt% or more, particularly preferably 15 wt% or more. The upper limit of the amount of bonded styrene is preferably 50 wt% or less, more preferably 45 wt% or less, further preferably 35 wt% or less, particularly preferably 30 wt% or less.

The vinyl bond content of the butadiene monomer units contained in the solution polymerized styrene-butadiene rubber is preferably 40 to 90 mol%, more preferably 40 to 80 mol%, further preferably 40 to 75 mol%, particularly preferably 40 to 70 mol%. In the present invention, the solution polymerized styrene-butadiene rubber, that is, the styrene-butadiene rubber obtained by solution polymerization is used, and therefore by adjusting polymerization conditions, etc. (for example, the amount of a polar compound described below) in such solution polymerization, the vinyl bond content of the butadiene monomer units can be adjusted in a relatively wide range so as to set the vinyl bond content in the above relatively wide ranges. Further, the vinyl bond content can be set in the above ranges to thereby highly balance both of the wet grip and the low fuel consumption property of the cross-linked rubber obtained by polymer blending of the solution polymerized styrene-butadiene rubber and the cyclopentene ring-opening polymer.

On the other hand, when the styrene-butadiene rubber is produced by a method other than solution polymerization, such as emulsion polymerization, the vinyl bond content of the butadiene monomer units can be somewhat adjusted by polymerization conditions, but the range able to be adjusted is narrow, and can only be adjusted in a low range (for example, the vinyl bond content is about 10 to 30 mol% in range). Therefore, the vinyl bond content of the butadiene monomer units in the emulsion polymerized styrene-butadiene rubber cannot be adjusted in the above ranges. On the contrary, according to the solution polymerized styrene-butadiene rubber, the vinyl bond content of the butadiene monomer units can be adjusted in the above ranges, and thus both the wet grip and the low fuel consumption property of the obtained cross-linked rubber can be more highly balanced.

The Mooney viscosity (ML₁₊₄, 100°C) of the solution polymerized styrene-butadiene rubber is also not particularly limited, but is preferably 20 to 90, more preferably 30 to 70.

The solution polymerized styrene-butadiene rubber is a modified solution polymerized styrene-butadiene rubber from the viewpoint of improving the affinity of the rubber composition for a tire with an inorganic particle so as to allow the wet grip and the low heat buildup property of the obtained cross-linked rubber to be excellent. The modified group introduced to the modified solution polymerized styrene-butadiene rubber is a hydroxyl group or an amino group. A further modified group disclosed herein is a carboxyl group.

Another modified group disclosed herein is a silicon atom.

The glass transition temperature of the solution polymerized styrene-butadiene rubber is not particularly limited, but is preferably - 75 to -10°C, more preferably -70 to -15°C, further preferably -65 to -20°C from the viewpoint of obtaining a rubber composition for a tire which can give a cross-linked rubber exhibiting excellent characteristics at a low temperature. By using, as the solution polymerized styrene-butadiene rubber, one where the glass transition temperature is in the above ranges, the wet grip of the obtained cross-linked rubber can be more enhanced.

The solution polymerized styrene-butadiene rubber may be so-called oil-extended rubber to which extension oil is compounded. As the extension oil, for example, paraffin, aromatic and naphthene-based petroleum softeners, plant-based softeners, fatty acid, etc. may be mentioned. When any petroleum softener is used, the content of polycyclic aromatics extracted according to the IP 346 method (a test method of THE INSTITUTE PETROLEUM in England) is preferably less than 3%. When the extension oil is used, the amount of use thereof is usually 5 to 100 parts by weight with respect to 100 parts by weight of the solution polymerized styrene butadiene, preferably 10 to 60 parts by weight, more preferably 20 to 50 parts by weight.

In the method of producing the solution polymerized styrene-butadiene rubber used in the present invention, for example, such a polymer can be produced by polymerizing the monomer mixture containing styrene and 1,3-butadiene in an inert solvent by use of a polymerization initiator to thereby obtain a polymer chain having an active end, then, if required, modifying the obtained polymer chain having an active end.

As the inert solvent to be used, any solvent can be used without any particular limitation as long as it is usually used in solution polymerization and does not inhibit the polymerization reaction. As specific examples thereof, for example, an aliphatic hydrocarbon such as butane, pentane, hexane and 2-butene; an alicyclic hydrocarbon such as cyclopentane, cyclohexane and cyclohexene; an aromatic hydrocarbon such as benzene, toluene and xylene; may be mentioned. The amount of use of the inert solvent corresponds to a ratio so that the monomer concentration is usually 1 to 50 wt%, preferably 10 to 40 wt%.

The polymerization initiator is not particularly limited as long as it can polymerize the monomer containing styrene and 1,3-butadiene to give the polymer chain having an active end, but for example, an organic alkali metal compound and an organic alkali earth metal compound, or a polymerization initiator including a compound of metal of the lanthanide series as a main catalyst is preferably used. As specific examples of the organic alkali metal compound, for example, an organomonolithium compound such as n-butyllithium, sec-butyllithium, t-butyllithium, hexyllithium, phenyllithium and stilbenelithium; an organic polyvalent lithium compound such as dilithiomethane, 1,4-dilithiobutane, 1,4-dilithio-2-ethylcyclohexane and 1,3,5-trilithiobenzene; an organosodium compound such as sodium naphthalene; and an organopotassium compound such as potassium naphthalene may be mentioned. As the organic alkali earth metal compound, n-butylmagnesium, n-hexylmagnesium, ethoxycalcium, calcium stearate, t-butoxystrontium, ethoxybarium, isopropoxybarium, ethylmercaptobarium, t-butoxybarium, phenoxybarium, diethylaminobarium, barium stearate, ketyl barium, etc. may be mentioned. As the polymerization initiator including a compound of metal of the lanthanide series as a main catalyst, a polymerization initiator comprised of, as a main catalyst, a salt of metal of the lanthanide series comprised of metal of the lanthanide series such as lanthanum, cerium, praseodymium, neodymium, samarium and gadolinium, and carboxylic acid or phosphorus-containing organic acid, and a co-catalyst such as an alkyl aluminum compound, an organoaluminum hydride compound and an organoaluminum halide compound may be mentioned. Among such polymerization initiators, an organolithium compound, in particular, an organomonolithium compound is preferably used. Note that, an organic alkali metal compound may also react with a secondary amine such as dibutylamine, dihexylamine, dibenzylamine, pyrrolidine, hexamethyleneimine and heptamethyleneimine (preferably, pyrrolidine, hexamethyleneimine, heptamethyleneimine) in advance and then be used as an organic alkali metal amide compound. These polymerization initiators may be used respectively alone or as two types or more combined.

The amount of use of the polymerization initiator is usually 1 to 50 mmol with respect to 1000 g of the monomer used in the polymerization, preferably 2 to 20 mmol, more preferably 4 to 15 mmol in range.

In order to modulate the vinyl bond content of 1,3-butadiene monomer units, when the monomer is polymerized, a polar compound is preferably added to the inert solvent used in the polymerization. As the polar compound, for example, an ether compound such as dibutyl ether, tetrahydrofuran and ditetrahydrofurylpropane; tertiary amine such as tetramethylethylenediamine; an alkali metal alkoxide; a phosphine compound, etc. may be mentioned. Among these, an ether compound or tertiary amine is preferable, tertiary amine is more preferable, and tetramethylethylenediamine is particularly preferably used. The amount of use of the polar compound is preferably 0.01 to 100 mol with respect to 1 mol of the polymerization initiator, more preferably 0.3 to 30 mol in range. When the amount of use of the polar compound falls within the ranges, the vinyl bond content of 1,3-butadiene monomer units is easily modulated, due to this, the vinyl bond content of butadiene monomer units can be suitably set to fall within the above ranges, and defect due to deactivation of the polymerization initiator is also hardly caused.

The polymerization temperature is usually -78 to 150°C, preferably 0 to 100°C, more preferably 30 to 90°C in range. As the polymerization system, any system such as a batch system or a continuous system can be adopted.

The polymer chain having an active end obtained by such a polymerization reaction can react with a modifying agent to introduce the modified group, thereby the modified rubber (modified solution polymerized styrene-butadiene rubber) can be obtained.

When a hydroxyl group, an amino group, or a carboxyl group is introduced as the modified group, for example, when a hydroxyl group is introduced, as the modifying agent, an amino group-containing glycidyl compound such as tetraglycidyl-1,3-bisaminomethylcyclohexane, tetraglycidyl diaminodiphenylmethane, tetraglycidyl-p-phenylenediamine and triglycidyl isocyanurate; etc. may be used. The epoxy group contained in the modifying agent can be hydrolyzed and thus converted to a hydroxyl group. Therefore, a hydroxyl group can be introduced by not only the method where the above modifying agent is used, but also a method where, as a compound represented by the following general formula (1) described below, a compound containing an epoxy group is used and is hydrolyzed.

When an amino group is introduced, an N-substituted cyclic amide compound such as N-methyl-2-pyrrolidone, N-vinyl-2-pyrrolidone, N-phenyl-2-pyrrolidone and N-methyl-ε-caprolactam; a linear amine compound such as 1,1-dimethoxytrimethylamine and 1,1-diethoxytrimethylamine; an N-substituted carbodiimide compound such as dicyclohexylcarbodiimide; a Schiff base compound such as N-ethylethylideneimine and N-methylbenzylideneimine; an N-substituted aminoketone compound such as 4,4'-bis(dimethylamino)benzophenone and 4,4'-bis(diethylamino)benzophenone; an aromatic isocyanate compound such as diphenylmethane diisocyanate and 2,4-tolylene diisocyanate; an amino group-containing vinyl aromatic compound such as dimethylaminomethylstyrene, dimethylaminoethylstyrene, 1-(4-N,N-dimethylaminophenyl)-1-phenylethylene and 1-(morphorinophenyl)-1-phenylethylene; an amino group-containing unsaturated amide compound such as N,N-dimethylaminopropyl (meth)acrylicamide; a pyridyl group-containing vinyl compound such as 4-vinylpyridine; etc. can be used.

Further, when a carboxyl group is introduced, an unsaturated carboxylic acid ester compound such as methyl (meth)acrylate, ethyl (meth)acrylate, propyl (meth)acrylate and butyl (meth)acrylate; an epoxy group-containing unsaturated carboxylic acid ester compound such as glycidyl (meth)acrylate; etc. may be used.

Further, when a silane atom containing modified group is introduced as the modified group, as the modifying agent, at least one silane compound among silane compounds represented by the following general formulas (1) to (3) is preferably used from the viewpoint that the wet grip and the low heat buildup property of the obtained cross-linked rubber can be more increased.

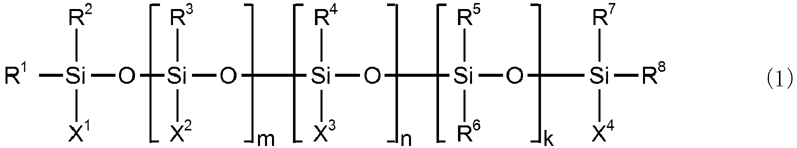

In the above general formula (1), each of R¹ to R⁸ represents an alkyl group having 1 to 6 carbon atoms or an aryl group having 6 to 12 carbon atoms, and R¹ to R⁸ may be the same as or different from each other. Each of X¹ and X⁴ represents a functional group able to react with the active end of the polymer chain, an alkyl group having 1 to 6 carbon atoms, or an aryl group having 6 to 12 carbon atoms, and X¹ and X⁴ may be the same as or different from each other. X² represents a functional group able to react with the active end of the polymer chain. X³ represents a group containing 2 to 20 alkyleneglycol repeating units. "m" is an integer of 3 to 200, "n" is an integer of 0 to 200, and "k" is an integer of 0 to 200.

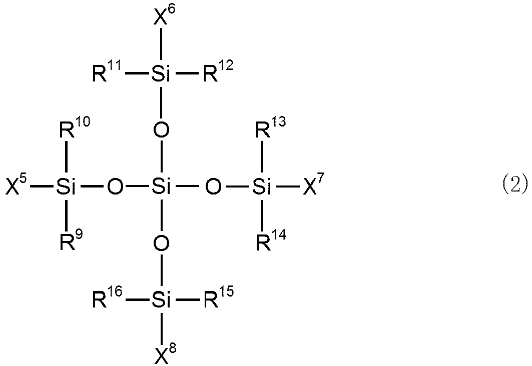

In the above general formula (2), each of R⁹ to R¹⁶ represents an alkyl group having 1 to 6 carbon atoms or an aryl group having 6 to 12 carbon atoms, and R⁹ to R¹⁶ may be the same as or different from each other. Each of X⁵ to X⁸ represents a functional group able to react with the active end of the polymer chain.

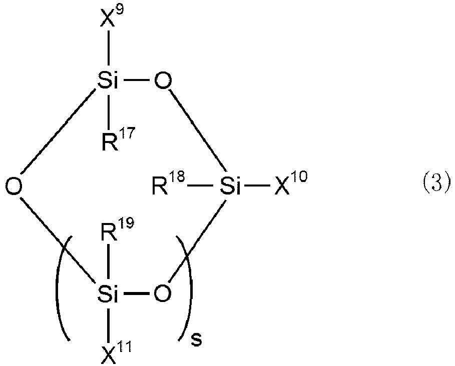

In the above general formula (3), each of R¹⁷ to R¹⁹ represents an alkyl group having 1 to 6 carbon atoms or an aryl group having 6 to 12 carbon atoms, and R¹⁷ to R¹⁹ may be the same as or different from each other. Each of X⁹ to X¹¹ represents a functional group able to react with the active end of the polymer chain. "s" is an integer of 1 to 18.

In the polyorganosiloxane represented by the above general formula (1), as the alkyl group having 1 to 6 carbon atoms forming each of R¹ to R⁸, and X¹ and X⁴, for example, a methyl group, ethyl group, n-propyl group, isopropyl group, butyl group, pentyl group, hexyl group, cyclohexyl group, etc. may be mentioned. As the aryl group having 6 to 12 carbon atoms, for example, a phenyl group, methylphenyl group, etc. may be mentioned. Among these alkyl groups and aryl groups, a methyl group is particularly preferable.

The functional group able to react with the active end of the polymer chain, forming each of X¹, X² and X⁴, is not particularly limited, but an alkoxyl group having 1 to 5 carbon atoms, a hydrocarbon group containing a 2-pyrrolidonyl group, and an epoxy group-containing group having 4 to 12 carbon atoms are preferable.

As the alkoxyl group having 1 to 5 carbon atoms, for example, a methoxy group, ethoxy group, propoxy group, isopropoxy group, butoxy group, etc. may be mentioned. Among these, a methoxy group is preferable.

As the hydrocarbon group containing a 2-pyrrolidonyl group, a group represented by the following general formula (6) may be preferably mentioned.

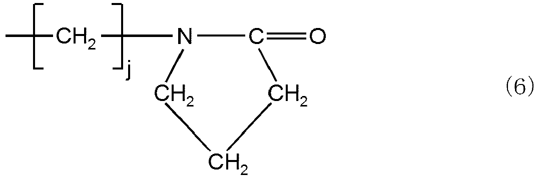

In the above general formula (6), "j" is an integer of 2 to 10, and in particular, "j" is preferably 2.

As the epoxy group-containing group having 4 to 12 carbon atoms, a group represented by the following general formula (7) may be mentioned.

-Z¹-Z²-E (7)

In the above general formula (7), Z¹ represents an alkylene group or an alkylarylene group having 1 to 10 carbon atoms, Z² represents a methylene group, a sulfur atom or an oxygen atom, and E represents a substituted hydrocarbon group having 2 to 10 carbon atoms and having an epoxy group. Among these, one in which Z² represents an oxygen atom is preferable, one in which Z² represents an oxygen atom and E represents a glycidyl group is more preferable, and one in which Z¹ represents an alkylene group having 3 carbon atoms, Z² represents an oxygen atom and E represents a glycidyl group is particularly preferable.

In the polyorganosiloxane represented by general formula (1) before the reaction with the active end of the polymer chain, when at least one of X¹, X² and X⁴ represents an alkoxyl group having 1 to 5 carbon atoms, it is considered that, when the polyorganosiloxane reacts with the polymer chain, the bond between a silicon atom and an oxygen atom of the alkoxyl group is dissociated so that the polymer chain directly bonds to the silicon atom, thereby a single bond is formed.

In the polyorganosiloxane represented by general formula (1) before the reaction with the active end of the polymer chain, when at least one of X¹, X² and X⁴ represents a hydrocarbon group containing a 2-pyrrolidonyl group, it is considered that, when the polyorganosiloxane reacts with the polymer chain, the carbon-oxygen bond of the carbonyl group forming the 2-pyrrolidonyl group is dissociated to form a structure in which the polymer chain is bonded to the carbon atom.

Furthermore, in the polyorganosiloxane represented by general formula (1) before the reaction with the active end of the polymer chain, when at least one of X¹, X² and X⁴ represents an epoxy group-containing group having 4 to 12 carbon atoms, it is considered that, when the polyorganosiloxane reacts with the polymer chain, the carbon-oxygen bond forming the epoxy ring is dissociated to form a structure in which the polymer chain is bonded to the carbon atom.

In the polyorganosiloxane represented by the above general formula (1), each of X¹ and X⁴ preferably represents an epoxy group-containing group having 4 to 12 carbon atoms, or an alkyl group having 1 to 6 carbon atoms, among the above. X² preferably represents an epoxy group-containing group having 4 to 12 carbon atoms, among the above.

In the polyorganosiloxane represented by the above general formula (1), X³, that is, the group containing 2 to 20 alkyleneglycol repeating units is preferably a group represented by the following general formula (8).

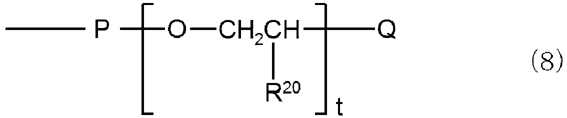

In the above general formula (8), "t" is an integer of 2 to 20, P represents an alkylene group or an alkylarylene group having 2 to 10 carbon atoms, R²⁰ represents a hydrogen atom or a methyl group, and Q represents an alkoxyl group or an aryloxy group having 1 to 10 carbon atoms. Among these, one in which "t" is an integer of 2 to 8, P represents an alkylene group having 3 carbon atoms, R represents a hydrogen atom and Q represents a methoxy group is preferable.

In the polyorganosiloxane represented by the above general formula (1), "m" is an integer of 3 to 200, preferably 20 to 150, more preferably 30 to 120. In the polyorganosiloxane represented by the above general formula (1), "n" is an integer of 0 to 200, preferably an integer of 0 to 150, more preferably an integer of 0 to 120. "k" is an integer of 0 to 200, preferably an integer of 0 to 150, more preferably an integer of 0 to 120. Furthermore, the total of "m", "n" and "k" is preferably 400 or less, more preferably 300 or less, particularly preferably 250 or less. When "m", "n" and "k" are set to fall within the above ranges, processability can become more suitable.

In addition, R⁹ to R¹⁹ and X⁵ to X¹¹ in the above general formula (2) and the above general formula (3) may be the same as R¹ to R⁸ and X¹ to X⁴ in the above general formula (1).

The amount of use of the modifying agent is usually more than 0.001 mol and less than 0.1 mol with respect to 1 mol of the polymerization initiator which is used, preferably more than 0.005 mol and less than 0.09 mol, more preferably more than 0.01 mol and less than 0.08 mol.

The modifying agent is preferably added to the polymerization system because, if added, it is dissolved in the inert solvent used in the polymerization to uniformly react with the active end of the polymer chain having an active end easily. The solution concentration is preferably 1 to 50 wt%. The time at which the modifying agent reacts with the polymer chain having an active end is preferably when the polymerization reaction is substantially completed, and is preferably after the polymerization reaction is substantially completed and before the polymer chain having an active end is gelated due to a side reaction or a chain transfer reaction by impurities in the polymerization system occurs. Note that, before the modifying agent reacts with the polymer chain having an active end, a coupling agent usually used may be added to the polymerization system to partially make an active end of the polymer chain inert, as long as the effects of the present invention are not impaired.

With respect to the reaction conditions where the modifying agent reacts with the polymer chain having an active end, the reaction temperature is usually 0 to 100°C, preferably 30 to 90°C in range and the reaction time is usually 1 to 120 minutes, preferably 2 to 60 minutes in range.

After the modifying agent reacts with the polymer chain having an active end, an alcohol such as methanol or isopropanol, or water is preferably added thereto to deactivate the active end.

Alternatively, when unmodified solution polymerized styrene-butadiene rubber is used, the polymer chain having an active end does not be reacted with the modifying agent reacts, and an alcohol or water may be added to the polymer chain having an active end thereto to deactivate the active end.

The content ratio of the cyclopentene ring-opening polymer and the solution polymerized styrene-butadiene rubber in the rubber composition for a tire of the present invention is not particularly limited, but it is preferably 5:95 to 90:10 in terms of the weight ratio of (cyclopentene ring-opening polymer : solution polymerized styrene-butadiene rubber), more preferably 5:95 to 85:15, further preferably 5:95 to 80:20, particularly preferably 15:85 to 55:45. The cyclopentene ring-opening polymer and the solution polymerized styrene-butadiene rubber are contained in the above ratio to thereby allow the rubber composition for a tire of the present invention to give a cross-linked rubber particularly excellent in wet grip and low heat buildup property. Note that, the ratio is determined based on the weights of the polymers forming the rubber component in the cyclopentene ring-opening polymer and the solution polymerized styrene-butadiene rubber, and is determined, for example, with the weight of extension oil, etc. excluded.

The rubber composition for a tire of the present invention may contain rubber other than the cyclopentene ring-opening polymer and the solution polymerized styrene-butadiene rubber, as a rubber component. As the rubber other than the cyclopentene ring-opening polymer and the solution polymerized styrene-butadiene rubber, for example, natural rubber (NR), polyisoprene rubber (IR), polybutadiene rubber (including various microstructures such as low cis BR, high cis BR, and high trans BR (trans bond content in butadiene part of 70 to 95%)), styrene-isoprene copolymer rubber, butadiene-isoprene copolymer rubber, emulsion polymerized styrene-acrylonitrile-butadiene copolymer rubber, acrylonitrile-butadiene copolymer rubber, polyisoprene-SBR block copolymer rubber, polystyrene-polybutadiene-polystyrene block copolymer, acrylic rubber, epichlorohydrin rubber, fluororubber, silicone rubber, ethylene-propylene rubber, urethane rubber, etc. may be mentioned. Among these, NR, BR, IR, and emulsion polymerized SBR are preferably used. These rubbers can be used respectively alone or as two types or more combined. From the viewpoint of improving the wet grip and the low heat buildup property of the cross-linked rubber obtained by using the rubber composition for a tire of the present invention, however, the content of the rubber other than the cyclopentene ring-opening polymer and the solution polymerized styrene-butadiene rubber in the rubber composition for a tire of the present invention is preferably 60 wt% or less with respect to the total rubber component, preferably 55 wt% or less, more preferably 40 wt% or less.

Further, the rubber composition for a tire of the present invention may have the following configuration to thereby allow the obtained cross-linked rubber to be excellent in not only wet grip and low heat buildup property, but also ice grip.

That is, by making the rubber composition for a tire of the present invention a composition where an end functional group-containing cyclopentene ring-opening polymer having a functional group at an end of a polymer chain is used as the cyclopentene ring-opening polymer and rubber having an amount of bonded styrene of 5 to 35 wt% is used as the solution polymerized styrene-butadiene rubber, and the content ratio of the cyclopentene ring-opening polymer is 10 to 55 wt% and the content ratio of the solution polymerized styrene-butadiene rubber is 30 to 75 wt% in the rubber component contained in the rubber composition for a tire, the obtained cross-linked rubber can made excellent also in ice grip (have a configuration for an enhancement in also ice grip).

When the configuration for an enhancement in also ice grip is adopted, the amount of bonded styrene in the solution polymerized styrene-butadiene rubber is 5 to 35 wt%, preferably 10 to 30 wt%, more preferably 15 to 30 wt%, and by setting the amount of bonded styrene in the above ranges, the obtained cross-linked rubber can made highly balanced in both the wet grip and the ice grip.

When the configuration for an enhancement in also ice grip is adopted, the glass transition temperature of the solution polymerized styrene-butadiene rubber is not particularly limited, but is preferably - 75 to -10°C, more preferably -70 to -15°C, further preferably -65 to -20°C from the viewpoint of obtaining a rubber composition for a tire which can give a cross-linked rubber exhibiting excellent characteristics at a low temperature. By using, as the solution polymerized styrene-butadiene rubber, one where the glass transition temperature is in the above ranges, the wet grip of the obtained cross-linked rubber can be more enhanced.

Further, when the configuration for an enhancement in also ice grip is adopted, the content ratio of the end functional group-containing cyclopentene ring-opening polymer in the rubber composition for a tire of the present invention is 10 to 55 wt% in terms of the content ratio in the total rubber component contained in the rubber composition for a tire of the present invention, preferably 15 to 55 wt%, more preferably 15 to 50 wt%. By setting the content ratio of the end functional group-containing cyclopentene ring-opening polymer in the above ranges, the ice grip of the obtained cross-linked rubber can be improved.

Further, when the configuration for an enhancement in also ice grip is adopted, the content ratio of the solution polymerized styrene-butadiene rubber in the rubber composition for a tire of the present invention is 30 to 75 wt% in terms of the content ratio in the total rubber component contained in the rubber composition for a tire of the present invention, preferably 30 to 70 wt%, more preferably 30 to 65 wt%. By setting the content ratio of the solution polymerized styrene-butadiene rubber in the above ranges, the ice grip of the obtained cross-linked rubber can be improved.

Note that, the above content is determined based on the weights of the polymers forming the rubber component, and is determined, for example, with the weight of extension oil, etc. excluded.

Further, when the configuration for an enhancement in also ice grip is adopted, at least one selected from natural rubber, polyisoprene rubber and polybutadiene rubber is preferably further contained as the rubber other than the end functional group-containing cyclopentene ring-opening polymer and the solution polymerized styrene-butadiene rubber from the viewpoint that the ice grip of the obtained cross-linked rubber can be more enhanced, and such rubbers can be used respectively alone or as two types or more combined. When the rubber other than the end functional group-containing cyclopentene ring-opening polymer and the solution polymerized styrene-butadiene rubber is compounded, the content thereof is preferably 15 to 60 wt% in terms of the content ratio in the total rubber component contained in the rubber composition for a tire of the present invention, more preferably 15 to 55 wt%, further preferably 20 to 55 wt%.

The rubber composition for a tire of the present invention may contain an inorganic particle as a filler. The inorganic particle able to be used as a filler is not particularly limited, but silica and/or carbon black may be mentioned.

As specific examples of the silica as a filler, without particular limitation, for example, dry type white carbon, wet type white carbon, colloidal silica, precipitated silica, etc. may be mentioned. Further, a carbon-silica dual phase filler comprised of carbon black on the surface of which silica is carried may also be used. Among these, wet type white carbon containing hydrous silicic acid as a main ingredient is preferable. These may be used respectively alone or as two types or more combined.

The nitrogen adsorption specific surface area of the silica as the filler is preferably 50 to 300 m²/g, more preferably 80 to 220 m²/g, particularly preferably 100 to 170 m²/g. If the specific surface area is in these ranges, the obtained cross-linked rubber can be more excellent in low heat buildup property. Further, the pH of the silica is preferably less than 7, more preferably 5 to 6.9. Note that, the nitrogen adsorption specific surface area can be measured by BET method based on ASTM D3037-81.

In the silica as a filler, the primary particle size is preferably 1 to 100 nm in range, more preferably 5 to 70 nm, further preferably 20 to 50 nm.

When the silica is used as the filler, the amount of the silica is preferably 1 part by weight or more with respect to 100 parts by weight of the rubber component in the rubber composition for a tire, more preferably 10 parts by weight or more, further preferably 15 parts by weight or more, still more preferably 20 parts by weight or more, particularly preferably 30 parts by weight or more, most preferably 50 parts by weight or more. Further, the upper limit of the amount of the silica is preferably 200 parts by weight or less, more preferably 150 parts by weight or less, further preferably 120 parts by weight or less, still more preferably 100 parts by weight or less. By setting the amount of the silica in the above ranges, the obtained cross-linked rubber can be made particularly good in the wet grip and the low heat buildup property. If the amount of the silica is too small, the wet grip and the abrasion resistance of the obtained cross-linked rubber is liable to be deteriorated. Further, if the amount is too large, the low heat buildup property thereof is liable to be lowered.

Note that, when the silica is compounded as a filler, a silane coupling agent is preferably further compounded from the viewpoint of further improving the low heat buildup property of the obtained cross-linked rubber. As the silane coupling agent, for example, vinyltriethoxysilane, β-(3,4-epoxycyclohexyl)ethyltrimethoxysilane, N-(β-aminoethyl) -γ-aminopropyltrimethoxysilane, 3-octanoylthio-1-propyl-triethoxysilane, bis(3-(triethoxysilyl)propyl)disulfide, bis(3-(triethoxysilyl)propyl)tetrasulfide, γ-trimethoxysilylpropyldimethylthiocarbamyl tetrasulfide, γ-trimethoxysilylpropylbenzothiazyl tetrasulfide, and a compound represented by formula (10) (where, in the formula (10), each L independently represents an alkanediyl group or alkenediyl group having 1 to 9 carbon atoms, "x" is an integer of 1 to 150 and "y" is an integer of 1 to 150) and a compound represented by formula (11) which are used in Examples described below, etc. may be mentioned. Among these, from the viewpoint that the wet grip and the low heat buildup property of the obtained cross-linked rubber can be more enhanced, a compound containing a sulfur atom is preferable, and a compound containing a monosulfide group and/or a thiol group is more preferable. These silane coupling agent can be used respectively alone or as two types or more combined. The amount of the silane coupling agent is preferably 0.1 part by weight or more with respect to 100 parts by weight of the silica, more preferably 0.3 part by weight or more, further preferably 1 part by weight or more, particularly preferably 5 parts by weight or more. Further, the upper limit of the amount of the silane coupling agent is preferably 30 parts by weight or less, more preferably 20 parts by weight or less, further preferably 15 parts by weight or less.

Further, as the carbon black as the filler, furnace black, acetylene black, thermal black, channel black, graphite, etc. may be mentioned. Among these, furnace black is preferably used. As specific examples thereof, SAF, ISAF, ISAF-HS, ISAF-LS, IISAF-HS, HAF, HAF-HS, HAF-LS, T-HS, T-NS, MAF, FEF, etc. may be mentioned. These may be used respectively alone or as two types or more combined.

The nitrogen adsorption specific surface area of the carbon black as the filler is preferably 5 to 200 m²/g, more preferably 20 to 130 m²/g, further preferably 40 to 80 m²/g. Further, the amount of adsorption of dibutyl phthalate (DBP) in the carbon black as the filler is preferably 5 to 200 ml/100g, more preferably 50 to 160 ml/100g, further preferably 70 to 130 ml/100g. If the specific surface area and the amount of adsorption of dibutyl phthalate in the carbon black are in the above ranges, the formability of the rubber composition for a tire can be made good and the obtained cross-linked rubber can be made excellent in low heat buildup property.

When the carbon black is used as the filler, the amount of the carbon black is preferably 1 to 150 parts by weight with respect to 100 parts by weight of the rubber component in the rubber composition for a tire, more preferably 2 to 120 parts by weight, further preferably 5 to 100 parts by weight. By the amount of the carbon black in the above ranges, the low heat buildup property of the obtained cross-linked rubber can be improved. If the amount of the carbon black is too small or too large, the low heat buildup property of the obtained cross-linked rubber is liable to be lowered.

Further, when both silica and carbon black are compounded to the rubber composition for a tire of the present invention, the total amount of the silica and the carbon black is preferably 25 to 120 parts by weight with respect to 100 parts by weight of the rubber component in the rubber composition, more preferably 30 to 100 parts by weight.

Further, when the configuration for an enhancement in also ice grip is adopted in the present invention, silica is desirably contained as a filler. In such a case, the amount of the silica is 30 to 200 parts by weight with respect to 100 parts by weight of the rubber component in the rubber composition for a tire, preferably 30 to 150 parts by weight, more preferably 40 to 120 parts by weight. If the amount of the silica is too small, the ice grip of the obtained cross-linked rubber is deteriorated, and on the other hand, if the amount is too large, dispersion of the silica in the rubber component becomes difficult, and kneading processability and extrusion processability are deteriorated.

Further, when the configuration for an enhancement in also ice grip is adopted, silica which is used is preferably one where the nitrogen adsorption specific surface area measured by a BET method is 100 m²/g or less, more preferably 50 to 100 m²/g, further preferably 55 to 95 m²/g. When the specific surface area is in these ranges, the ice grip of the obtained cross-linked rubber can be more enhanced. Further, the above silane coupling agent is preferably further compounded from the viewpoint of further improving the low heat buildup property of the rubber composition for a tire.

Further, when the configuration for an enhancement in also ice grip is adopted, any filler other than silica may be contained, and as the filler other than silica, for example, carbon black may be mentioned. The amount of the carbon black in this case is preferably 1 to 150 parts by weight with respect to 100 parts by weight of the rubber component in the rubber composition for a tire, more preferably 2 to 120 parts by weight.

Further, the rubber composition for a tire of the present invention may contain, in addition to the above components, a compounding agent such as a cross-linking agent, cross-linking accelerator, cross-linking activator, antioxidant, activator, process oil, plasticizer, lubricant, filler, tackifier and aluminum hydroxide compounded in necessary amounts by an ordinary method.

As the cross-linking agent, for example, sulfur, sulfur halide, organic peroxide, quinone dioximes, organic polyvalent amine compound, alkylphenol resin having a methylol group, etc. may be mentioned. Among these, sulfur is preferably used. The amount of the cross-linking agent is preferably 1.0 to 5.0 parts by weight with respect to 100 parts by weight of the rubber component in the rubber composition for a tire, more preferably 1.2 to 4.0 parts by weight, particularly preferably 1.4 to 3.0 parts by weight.

As the cross-linking accelerator, for example, a sulfenamide-based cross-linking accelerator such as N-cyclohexyl-2-benzothiazolylsulfenamide, N-t-butyl-2-benzothiazolylsulfenamide, N-oxyethylene-2-benzothiazolylsulfenamide, N-oxyethylene-2-benzothiazolylsulfenamide and N,N'-diisopropyl-2-benzothiazolylsulfenamide; a guanidine-based cross-linking accelerator such as 1,3-diphenylguanidine, diorthotolylguanidine and orthotolylbiguanidine; a thiourea-based cross-linking accelerator; a thiazole-based cross-linking accelerator; a thiuram-based cross-linking accelerator; a dithiocarbamic acid-based cross-linking accelerator; a xanthogenic acid-based cross-linking accelerator; etc. may be mentioned. Among these, one containing a sulfenamide-based cross-linking accelerator is particularly preferable. These cross-linking accelerators are used respectively alone or as two types or more combined. The amount of the cross-linking accelerator is preferably 0.1 to 15 parts by weight with respect to 100 parts by weight of the rubber component in the rubber composition for a tire, more preferably 0.5 to 5 parts by weight, particularly preferably 1.0 to 4.0 parts by weight.

As the cross-linking activator, for example, a higher fatty acid such as stearic acid, zinc oxide, etc. may be mentioned. The amount of the cross-linking activator is not particularly limited, but, when a higher fatty acid is used as the cross-linking activator, the amount thereof is preferably 0.05 to 15 parts by weight with respect to 100 parts by weight of the rubber component in the rubber composition for a tire, more preferably 0.5 to 5 parts by weight, and when zinc oxide is used as the cross-linking activator, the amount thereof is preferably 0.05 to 10 parts by weight with respect to 100 parts by weight of the rubber component in the rubber composition for a tire, more preferably 0.5 to 3 parts by weight.

As the process oil, for example, a petroleum-based softener such as paraffin, aromatic and naphthene-based softeners; a plant-based softener; fatty acid; etc. may be mentioned. As the other compounding agent, for example, an activator such as diethyleneglycol, polyethyleneglycol and silicone oil; a filler such as calcium carbonate, talc and clay; a tackifier such as a petroleum resin and a cumarone resin; wax; etc. may be mentioned.

In order to obtain the rubber composition for a tire of the present invention, the respective components may be kneaded in accordance with an ordinary method. For example, the intended composition can be obtained by kneading the compounding agents excluding the cross-linking agent and cross-linking accelerator with the rubber component, then mixing the cross-linking agent and cross-linking accelerator with the kneaded material. The kneading temperature when kneading the compounding agents excluding the cross-linking agent and cross-linking accelerator with the rubber component is preferably 80 to 200°C, more preferably 120 to 180°C. Further, the kneading time is preferably 30 seconds to 30 minutes. The cross-linking agent and cross-linking accelerator are usually mixed with the kneaded material after cooling down to 100°C or less, preferably 80°C or less. Note that, the rubber composition of the present invention may be obtained by a method of adding the compounding agents and fillers to solid rubber and kneading the resultant (dry kneading method), or a method of adding the compounding agents to a solution of rubber and solidifying and drying the resultant (wet kneading method).

The cross-linked rubber of the present invention is obtained by cross-linking the above rubber composition for a tire of the present invention.

When the rubber composition for a tire of the present invention is cross-linked, the method of cross-linking thereof is not particularly limited, and may be selected depending on the shape and the size of the cross-linked rubber. The rubber composition for a tire may be filled in a mold and heated, and thus cross-linked at the same time as molding, or the rubber composition for a tire, molded in advance, may be heated and cross-linked. The cross-linking temperature is preferably 120 to 200°C, more preferably 140 to 180°C, and the cross-linking time is usually about 1 to 120 minutes.

A cross-linked rubber obtained by cross-linking the rubber composition for a tire of the present invention is excellent in wet grip and low heat buildup property, and therefore can be, for example, utilized for various tire parts such as treads, carcasses, side walls, and beads in various tires such as all season tires, high performance tires and studless tires, but is particularly suitably used for tire treads. Further, the configuration for an enhancement in also ice grip is adopted to thereby allow the obtained cross-linked rubber to be excellent in not only wet grip and low heat buildup property, but also ice grip. Therefore, in such a case, the cross-linked rubber can be suitably used for winter tires, particularly suitably used for winter tire treads.

### EXAMPLES

Hereinafter, the present invention will be explained based on more detailed examples. Note that, in the examples, "parts" are based on weight unless otherwise indicated. Further, the tests and evaluations were performed in accordance with the following descriptions.

### [Molecular Weight of Cyclopentene Ring-Opening Polymer]

Using gel permeation chromatography (GPC) (GPC system HLC-8220 (made by Tosoh Corporation)) with tetrahydrofuran as a solvent and an H-type column HZ-M (made by Tosoh Corporation), measurement was performed at a column temperature of 40°C to find the number average molecular weight (Mn), weight average molecular weight (Mw), and molecular weight distribution (Mw/Mn) of the polymer as values converted to polystyrene.

### [Cis/Trans Ratio of Cyclopentene Ring-Opening Polymer]

The ratio was determined by ¹³C-NMR spectroscopy.

### [Melting Point (Tm) and Glass Transition Temperature (Tg) of Cyclopentene Ring-Opening Polymer]

Using a differential scanning calorimeter (DSC, made by PerkinElmer Co., Ltd.), the temperature of a measurement sample was sequentially changed as follows: the temperature was raised from 23°C to 120°C (heating rate: 100°C/min), kept at 120°C for 10 minutes, dropped to -120°C (cooling rate: 100°C/min), kept at -120°C for 10 minutes, and raised to 23°C (heating rate: 10°C/min). The average of the on-set values measured twice was defined as the measurement value of the glass transition temperature.

### [Ratio of Introduction of Oxysilyl Group in Cyclopentene Ring-Opening Polymer]

Using ¹H-NMR spectroscopy, the ratio of the peak integral value derived from the oxysilyl group and the peak integral value derived from the carbon-carbon double bond in the cyclopentene ring-opening polymer main chain was found. Based on the ratio of the peak integral values and the measurement value of the number average molecular weight (Mn) measured by GPC, the ratio of introduction of the oxysilyl group [percentage of (number of cyclopentene ring-opening polymer chain ends in which oxysilyl group was introduced/total number of cyclopentene ring-opening polymer chain ends)] was calculated.

### [Amount of Bonded Styrene and Amount of Vinyl Bond of Styrene-Butadiene Rubber]

The amount of bonded styrene and the amount of a vinyl bond were measured by ¹H-NMR.

### [Glass Transition Temperature (Tg) of Styrene-Butadiene Rubber]

Using a differential scanning calorimeter (DSC, made by PerkinElmer Co., Ltd.), the temperature of a measurement sample was sequentially changed as follows: the temperature was raised from 23°C to 120°C (heating rate: 100°C/min), kept at 120°C for 10 minutes, dropped to -120°C (cooling rate: 100°C/min), kept at -120°C for 10 minutes, and raised to 23°C (heating rate: 10°C/min). The average of the on-set values measured twice was defined as the measurement value of the glass transition temperature.

### [Mooney Viscosity of Styrene-Butadiene Rubber]

The Mooney viscosity (polymer Mooney) of the styrene-butadiene rubber was measured according to JIS K6300 (unit: (ML₁₊₄, 100°C)) .

### [Evaluation of Wet Grip]

The rubber composition as a sample was cross-linked by pressing at 160°C for 20 minutes to prepare a cross-linked test piece. This test piece was subjected to measurement by a viscoelasticity measurement device (product name "ARES-G2," made by TA Instruments) under conditions of a shear strain of 0.5% and a frequency of 10 Hz for measuring the tanδ at 0°C. This value was indexed to the measurement value of the sample of Comparative Example 1 as 100 with respect to Examples 1 to 21 and Comparative Examples 1 to 5, and indexed to the measurement value of the sample of Comparative Example 6 as 100 with respect to Examples 22 to 26, Comparative Example 6, and Reference Examples 1 and 2. The larger this index is, the more excellent the wet grip can be said to be.

### [Evaluation of Low Heat Buildup Property]

The rubber composition as a sample was cross-linked by pressing at 160°C for 20 minutes to prepare a cross-linked test piece. This test piece was subjected to measurement by a viscoelasticity measurement device (product name "ARES-G2," made by TA Instruments) under conditions of a shear strain of 2% and a frequency of 10 Hz for measuring the tanδ at 60°C. This value was indexed to the measurement value of the sample of Comparative Example 1 as 100 with respect to Examples 1 to 21 and Comparative Examples 1 to 5, and indexed to the measurement value of the sample of Comparative Example 6 as 100 with respect to Examples 22 to 26, Comparative Example 6, and Reference Examples 1 and 2. The larger this index is, the more excellent the low heat buildup property can be said to be.

### [Evaluation of Ice Grip]

The rubber composition as a sample was cross-linked by pressing at 160°C for 20 minutes to prepare a cross-linked test piece. This test piece was subjected to measurement by a viscoelasticity measurement device (product name "ARES-G2," made by TA Instruments) under conditions of a shear strain of 0.5% and a frequency of 10 Hz for measuring the storage elastic modulus at -20°C. Note that, the measurement was performed with respect to Examples 22 to 26, Comparative Example 6, and Reference Examples 1 and 2, and the values obtained from the measurement were indexed to the measurement value of the sample of Comparative Example 6 as 100. The larger this index is, the lower the storage elastic modulus at a low temperature can be said to be and the more excellent the ice grip can be said to be.

### [Reference Example 1]

### Preparation of diisobutyl aluminum mono(n-hexoxide)/toluene solution (2.5 wt%)

In a nitrogen atmosphere, a glass vessel equipped with a stirrer was charged with 88 parts of toluene and 7.8 parts of a 25.4 wt% triisobutyl aluminum/n-hexane solution (made by Tosoh Finechem Corporation) . Next, the vessel was cooled to -45°C, and 1.02 parts of n-hexanol (equivalent molar with respect to triisobutyl aluminum) was slowly dropped with vigorous stirring. After that, the resultant was left to stand with stirring until the temperature reached room temperature, to prepare a diisobutyl aluminum mono(n-hexoxide)/toluene solution (2.5 wt%).

### [Synthesis Example 1]

In a nitrogen atmosphere, a glass vessel equipped with a stirrer was charged with 87 parts of a 1.0 wt% WCl₆/toluene solution and 43 parts of the 2.5 wt% diisobutyl aluminum mono(n-hexoxide)/toluene solution prepared in Reference Example 1, and these were stirred for 15 minutes to thereby obtain a catalyst solution. Further, in a nitrogen atmosphere, a pressure resistant glass reaction vessel equipped with a stirrer was charged with 300 parts of cyclopentene and 0.42 part of vinyl(triethoxy)silane, to this, 130 parts of the catalyst solution prepared above was further added, and a polymerization reaction was performed at 25°C for 4 hours. After the polymerization reaction for 4 hours, the pressure resistant glass reaction vessel was charged with an excess of ethyl alcohol to stop the polymerization, and then the solution in the pressure resistant glass reaction vessel was poured into a large excess of ethyl alcohol including 2,6-di-t-butyl-p-cresol (BHT). Next, the precipitated polymer was recovered, washed by ethyl alcohol, and then dried in vacuo at 40°C for 3 days to thereby obtain 76 parts of a cyclopentene ring-opening polymer.

The obtained cyclopentene polymer was then subjected to the respective measurements of the molecular weight, the cis/trans ratio, the ratio of introduction of an oxysilyl group, the melting point (Tm) and the glass transition temperature (Tg) according to the above methods. The results are shown in Table 1.

### [Synthesis Example 2]

In a nitrogen atmosphere, a glass vessel equipped with a stirrer was charged with 87 parts of a 1.0 wt% WCl₆/toluene solution and 43 parts of the 2.5 wt% diisobutyl aluminum mono(n-hexoxide)/toluene solution prepared in Reference Example 1, and these were stirred for 15 minutes to thereby obtain a catalyst solution. Further, in a nitrogen atmosphere, a pressure resistant glass reaction vessel equipped with a stirrer was charged with 300 parts of cyclopentene and 4.97 parts of vinyltri(trimethylsiloxy)silane, to this, 130 parts of the catalyst solution prepared above was further added, and a polymerization reaction was performed at 10°C for 4 hours. After the polymerization reaction for 4 hours, the pressure resistant glass reaction vessel was charged with an excess of ethyl alcohol to stop the polymerization, and then the solution in the pressure resistant glass reaction vessel was poured into a large excess of ethyl alcohol including 2,6-di-t-butyl-p-cresol (BHT). Next, the precipitated polymer was recovered, washed by ethyl alcohol, and then dried in vacuo at 40°C for 3 days to thereby obtain 36 parts of a cyclopentene ring-opening polymer.

The obtained cyclopentene polymer was then subjected to the respective measurements of the molecular weight, the cis/trans ratio, the ratio of introduction of an oxysilyl group, the melting point (Tm) and the glass transition temperature (Tg) according to the above methods. The results are shown in Table 1.

### [Synthesis Example 3]

In a nitrogen atmosphere, a glass vessel equipped with a stirrer was charged with 87 parts of a 1.0 wt% WCl₆/toluene solution and 43 parts of the 2.5 wt% diisobutyl aluminum mono(n-hexoxide)/toluene solution prepared in Reference Example 1, and these were stirred for 15 minutes to thereby obtain a catalyst solution. Further, in a nitrogen atmosphere, a pressure resistant glass reaction vessel equipped with a stirrer was charged with 300 parts of cyclopentene and 0.26 part of 1-hexene, to this, 130 parts of the catalyst solution prepared above was further added, and a polymerization reaction was performed at 0°C for 4 hours. After the polymerization reaction for 4 hours, the pressure resistant glass reaction vessel was charged with an excess of ethyl alcohol to stop the polymerization, and then the solution in the pressure resistant glass reaction vessel was poured into a large excess of ethyl alcohol including 2,6-di-t-butyl-p-cresol (BHT). Next, the precipitated polymer was recovered, washed by ethyl alcohol, and then dried in vacuo at 40°C for 3 days to thereby obtain 74 parts of a cyclopentene ring-opening polymer.

The obtained cyclopentene polymer was then subjected to the respective measurements of the molecular weight, the cis/trans ratio, the ratio of introduction of an oxysilyl group, the melting point (Tm) and the glass transition temperature (Tg) according to the above methods. The results are shown in Table 1.

### [Synthesis Example 4]

In a nitrogen atmosphere, a glass vessel equipped with a stirrer was charged with 87 parts of a 1.0 wt% WCl₆/toluene solution and 43 parts of the 2.5 wt% diisobutyl aluminum mono(n-hexoxide)/toluene solution prepared in Reference Example 1, and these were stirred for 15 minutes to thereby obtain a catalyst solution. Further, in a nitrogen atmosphere, a pressure resistant glass reaction vessel equipped with a stirrer was charged with 300 parts of cyclopentene, 150 parts of toluene and 0.40 part of vinyltriethoxysilane, to this, 130 parts of the catalyst solution prepared above was further added, and a polymerization reaction was performed at 25°C for 4 hours. After the polymerization reaction for 4 hours, the pressure resistant glass reaction vessel was charged with an excess of ethyl alcohol to stop the polymerization, and then the solution in the pressure resistant glass reaction vessel was poured into a large excess of ethyl alcohol including 2,6-di-t-butyl-p-cresol (BHT). Next, the precipitated polymer was recovered, washed by ethyl alcohol, and then dried in vacuo at 40°C for 3 days to thereby obtain 43 parts of a cyclopentene ring-opening polymer.

The obtained cyclopentene polymer was then subjected to the respective measurements of the molecular weight, the cis/trans ratio, the ratio of introduction of an oxysilyl group, the melting point (Tm) and the glass transition temperature (Tg) according to the above methods. The results are shown in Table 1.

### [Synthesis Example 5]

In a nitrogen atmosphere, a glass vessel equipped with a stirrer was charged with 87 parts of a 1.0 wt% WCl₆/toluene solution and 43 parts of the 2.5 wt% diisobutyl aluminum mono(n-hexoxide)/toluene solution prepared in Reference Example 1, and these were stirred for 15 minutes to thereby obtain a catalyst solution. Further, in a nitrogen atmosphere, a pressure resistant glass reaction vessel equipped with a stirrer was charged with 300 parts of cyclopentene, 200 parts of toluene and 0.12 part of 1-hexene, to this, 130 parts of the catalyst solution prepared above was further added, and a polymerization reaction was performed at 25°C for 4 hours. After the polymerization reaction for 4 hours, the pressure resistant glass reaction vessel was charged with an excess of ethyl alcohol to stop the polymerization, and then the solution in the pressure resistant glass reaction vessel was poured into a large excess of ethyl alcohol including 2,6-di-t-butyl-p-cresol (BHT). Next, the precipitated polymer was recovered, washed by ethyl alcohol, and then dried in vacuo at 40°C for 3 days to thereby obtain 81 parts of a cyclopentene ring-opening polymer.

The obtained cyclopentene polymer was then subjected to the respective measurements of the molecular weight, the cis/trans ratio, the ratio of introduction of an oxysilyl group, the melting point (Tm) and the glass transition temperature (Tg) according to the above methods. The results are shown in Table 1.

### [Synthesis Example 6]

In a nitrogen atmosphere, a glass vessel equipped with a stirrer was charged with 87 parts of a 1.0 wt% WCl₆/toluene solution and 43 parts of the 2.5 wt% diisobutyl aluminum mono(n-hexoxide)/toluene solution prepared in Reference Example 1, and these were stirred for 15 minutes to thereby obtain a catalyst solution. Further, in a nitrogen atmosphere, a pressure resistant glass reaction vessel equipped with a stirrer was charged with 300 parts of cyclopentene and 1.24 parts of 1,4-bis(triethoxysilyl)-2-butene, to this, 130 parts of the catalyst solution prepared above was further added, and a polymerization reaction was performed at 25°C for 4 hours. After the polymerization reaction for 4 hours, the pressure resistant glass reaction vessel was charged with an excess of ethyl alcohol to stop the polymerization, and then the solution in the pressure resistant glass reaction vessel was poured into a large excess of ethyl alcohol including 2,6-di-t-butyl-p-cresol (BHT). Next, the precipitated polymer was recovered, washed by ethyl alcohol, and then dried in vacuo at 40°C for 3 days to thereby obtain 78 parts of a cyclopentene ring-opening polymer.

The obtained cyclopentene polymer was then subjected to the respective measurements of the molecular weight, the cis/trans ratio, the ratio of introduction of an oxysilyl group, the melting point (Tm) and the glass transition temperature (Tg) according to the above methods. The results are shown in Table 1.

### [Synthesis Example 7]

In a nitrogen atmosphere, a glass vessel equipped with a stirrer was charged with 58 parts of a 1.0 wt% WCl₆/toluene solution and 29 parts of the 2.5 wt% diisobutyl aluminum mono(n-hexoxide)/toluene solution prepared in Reference Example 1, and these were stirred for 15 minutes to thereby obtain a catalyst solution. Further, in a nitrogen atmosphere, a pressure resistant glass reaction vessel equipped with a stirrer was charged with 300 parts of cyclopentene and 1.71 parts of 1,4-bis(triethoxysilyl)-2-butene, to this, 87 parts of the catalyst solution prepared above was further added, and a polymerization reaction was performed at 25°C for 4 hours. After the polymerization reaction for 4 hours, the pressure resistant glass reaction vessel was charged with an excess of ethyl alcohol to stop the polymerization, and then the solution in the pressure resistant glass reaction vessel was poured into a large excess of ethyl alcohol including 2,6-di-t-butyl-p-cresol (BHT). Next, the precipitated polymer was recovered, washed by ethyl alcohol, and then dried in vacuo at 40°C for 3 days to thereby obtain 45 parts of a cyclopentene ring-opening polymer.

The obtained cyclopentene polymer was then subjected to the respective measurements of the molecular weight, the cis/trans ratio, the ratio of introduction of an oxysilyl group, the melting point (Tm) and the glass transition temperature (Tg) according to the above methods. The results are shown in Table 1.

### [Synthesis Example 8]

In a nitrogen atmosphere, a glass vessel equipped with a stirrer was charged with 58 parts of 1.0 wt% WCl₆/toluene solution and 29 parts of the 2.5 wt% diisobutyl aluminum mono(n-hexoxide)/toluene solution prepared in Reference Example 1, and these were stirred for 15 minutes to thereby obtain a catalyst solution. Further, in a nitrogen atmosphere, a pressure resistant glass reaction vessel equipped with a stirrer was charged with 300 parts of cyclopentene and 2.02 parts of 1,4-bis(triethoxysilyl)-2-butene, to this, 87 parts of the catalyst solution prepared above was further added, and a polymerization reaction was performed at 25°C for 4 hours. After the polymerization reaction for 4 hours, the pressure resistant glass reaction vessel was charged with an excess of ethyl alcohol to stop the polymerization, and then the solution in the pressure resistant glass reaction vessel was poured into a large excess of ethyl alcohol including 2,6-di-t-butyl-p-cresol (BHT). Next, the precipitated polymer was recovered, washed by ethyl alcohol, and then dried in vacuo at 40°C for 3 days to thereby obtain 39 parts of a cyclopentene ring-opening polymer.

The obtained cyclopentene polymer was then subjected to the respective measurements of the molecular weight, the cis/trans ratio, the ratio of introduction of an oxysilyl group, the melting point (Tm) and the glass transition temperature (Tg) according to the above methods. The results are shown in Table 1.

### [Synthesis Example 9]

In a nitrogen atmosphere, a glass vessel equipped with a stirrer was charged with 44 parts of a 1.0 wt% WCl₆/toluene solution and 22 parts of the 2.5 wt% diisobutyl aluminum mono(n-hexoxide)/toluene solution prepared in Reference Example 1, and these were stirred for 15 minutes to thereby obtain a catalyst solution. Further, in a nitrogen atmosphere, a pressure resistant glass reaction vessel equipped with a stirrer was charged with 300 parts of cyclopentene and 1.86 parts of 1,4-bis(triethoxysilyl)-2-butene, to this, 66 parts of the catalyst solution prepared above was further added, and a polymerization reaction was performed at 0°C for 4 hours. After the polymerization reaction for 4 hours, the pressure resistant glass reaction vessel was charged with an excess of ethyl alcohol to stop the polymerization, and then the solution in the pressure resistant glass reaction vessel was poured into a large excess of ethyl alcohol including 2,6-di-t-butyl-p-cresol (BHT). Next, the precipitated polymer was recovered, washed by ethyl alcohol, and then dried in vacuo at 40°C for 3 days to thereby obtain 27 parts of a cyclopentene ring-opening polymer.

The obtained cyclopentene polymer was then subjected to the respective measurements of the molecular weight, the cis/trans ratio, the ratio of introduction of an oxysilyl group, the melting point (Tm) and the glass transition temperature (Tg) according to the above methods. The results are shown in Table 1.

### [Synthesis Example 10]

In a nitrogen atmosphere, a glass vessel equipped with a stirrer was charged with 87 parts of a 1.0 wt% WCl₆/toluene solution and 43 parts of the 2.5 wt% diisobutyl aluminum mono(n-hexoxide)/toluene solution prepared in Reference Example 1, and these were stirred for 15 minutes to thereby obtain a catalyst solution. Further, in a nitrogen atmosphere, a pressure resistant glass reaction vessel equipped with a stirrer was charged with 300 parts of cyclopentene, 300 parts of toluene and 1.24 parts of 1,4-bis(triethoxysilyl)-2-butene, to this, 130 parts of the catalyst solution prepared above was further added, and a polymerization reaction was performed at 25°C for 4 hours. After the polymerization reaction for 4 hours, the pressure resistant glass reaction vessel was charged with an excess of ethyl alcohol to stop the polymerization, and then the solution in the pressure resistant glass reaction vessel was poured into a large excess of ethyl alcohol including 2,6-di-t-butyl-p-cresol (BHT). Next, the precipitated polymer was recovered, washed by ethyl alcohol, and dried in vacuo at 40°C for 3 days to thereby obtain 63 parts of a cyclopentene ring-opening polymer.

The obtained cyclopentene polymer was then subjected to the respective measurements of the molecular weight, the cis/trans ratio, the ratio of introduction of an oxysilyl group, the melting point (Tm) and the glass transition temperature (Tg) according to the above methods. The results are shown in Table 1.

### [Synthesis Example 11]

In a nitrogen atmosphere, an autoclave equipped with a stirrer was charged with 5670 g of cyclohexane, 170 g of styrene, 430 g of 1,3-butadiene and 10.0 mmol of tetramethylethylenediamine, and thereafter n-butyllithium was added in an amount necessary for neutralization of polymerization inhibition impurities contained in the cyclohexane, styrene and 1,3-butadiene. After that, 5.6 mmol of n-butyllithium was added for use in a polymerization reaction, and the polymerization was initiated at 40°C.

After a lapse of 10 minutes from the initiation of polymerization, 40 g of styrene and 360 g of 1,3-butadiene were continuously added over 60 minutes. The maximum temperature in the polymerization reaction was 70°C. After such continuous addition, the polymerization reaction was further continued for 10 minutes, and the polymerization conversion rate was confirmed to be from 95% to 100% in range. After that, 0.278 mmol of tin tetrachloride as a coupling agent was added in the state of a 20 wt% solution in cyclohexane to perform the reaction at 65°C for 10 minutes.

Next, 0.024 mmol of polyorganosiloxane represented by the following formula (9) as a modifying agent was added in the state of a 40 wt% solution in xylene to perform the reaction at 65°C for 20 minutes.

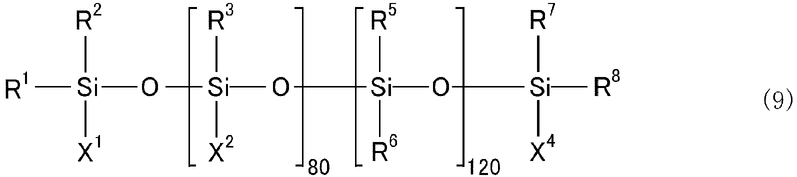

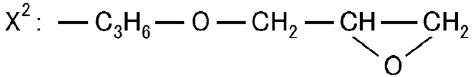

X¹, X⁴, R¹∼R³, R⁵∼R⁸: -CH₃

After that, methanol was added as a polymerization terminator in an amount corresponding to 2 times by mole with respect to the amount of n-butyllithium used in the polymerization reaction, to obtain a solution containing a hydroxyl group-modified styrene-butadiene rubber.

Next, 0.2 parts of 2,4-bis(n-octylthiomethyl)-6-methylphenol with respect to 100 parts of the rubber component of the solution containing hydroxyl group-modified styrene-butadiene rubber was added as an antioxidant. Next, the solvent was removed by steam stripping, and solid state rubber was recovered, dehydrated by a roll, and further dried by a hot air drier to thereby obtain hydroxyl group-modified solution polymerized styrene-butadiene rubber.

Further, in the obtained hydroxyl group-modified solution polymerized styrene-butadiene rubber, the amount of bonded styrene was 21 wt%, the vinyl bond content of butadiene units portion was 63 wt%, the Mooney viscosity (ML₁₊₄, 100°C) was 62, the glass transition temperature (Tg) was -25°C, and a hydroxyl group was introduced as a functional group.

### [Synthesis Example 12]

In a nitrogen atmosphere, an autoclave equipped with a stirrer was charged with 5670 g of cyclohexane, 170 g of styrene, 430 g of 1,3-butadiene and 8.4 mmol of tetramethylethylenediamine, and thereafter n-butyllithium was added in an amount necessary for neutralization of polymerization inhibition impurities contained in the cyclohexane, styrene and 1,3-butadiene. After that, 6.0 mmol of n-butyllithium was added for use in a polymerization reaction, and the polymerization was initiated at 40°C.

After a lapse of 10 minutes from the initiation of polymerization, 40 g of styrene and 360 g of 1,3-butadiene were continuously added over 60 minutes. The maximum temperature in the polymerization reaction was 70°C. After such continuous addition, the polymerization reaction was further continued for 10 minutes, and the polymerization conversion rate was confirmed to be from 95% to 100% in range. After that, 0.6 mmol of tin tetrachloride as a coupling agent was added in the state of a 20 wt% solution in cyclohexane to perform the reaction at 65°C for 10 minutes.

Next, 5.4 mmol of N-phenyl-2-pyrrolidone as a modifying agent was added in the state of a 40 wt% solution in xylene to perform the reaction at 65°C for 20 minutes.

After that, methanol was added as a polymerization terminator in an amount corresponding to 2 times by mole with respect to the amount of n-butyllithium used in the polymerization reaction, to obtain a solution containing amino group-modified styrene-butadiene rubber. Except for these, the same method was followed as that in Synthesis Example 11 to obtain amino group-modified solution polymerized styrene-butadiene rubber.

Further, in the obtained amino group-modified solution polymerized styrene-butadiene rubber, the amount of bonded styrene was 21 wt%, the vinyl bond content of butadiene units portion was 63 wt%, the Mooney viscosity (ML₁₊₄, 100°C) was 45, the glass transition temperature (Tg) was -25°C, and an amino group was introduced as a functional group.

### [Example 1]

In a Brabender type mixer having a volume of 250 ml, 30 parts of the cyclopentene ring-opening polymer obtained in Synthesis Example 1 and 70 parts of the hydroxyl group-modified solution polymerized styrene-butadiene rubber obtained in Synthesis Example 11 were masticated for 30 seconds, then 50 parts of silica (made by Rhodia, product name "Zeosil 1115MP", nitrogen adsorption specific surface area (BET method): 112 m²/g), 25 parts of process oil (made by JX Nippon Oil & Energy Corporation, product name "Aromax T-DAE") and 6.0 parts of a silane coupling agent: bis(3-(triethoxysilyl)propyl)tetrasulfide (made by Degussa, product name "Si69") were added and kneaded at 110°C as the starting temperature for 1.5 minutes, thereafter 25 parts of silica (made by Rhodia, product name "Zeosil 1115MP"), 3 parts of zinc oxide, 2 parts of stearic acid and 2 parts of an antioxidant: N-phenyl-N'-(1,3-dimethylbutyl)-p-phenylenediamine (made by Ouchi Shinko Chemical Industrial Co., Ltd., product name "Nocrac 6C") were added and further kneaded for 2.5 minutes, and then the kneaded material was discharged from the mixer. The temperature of the kneaded material at the time of the end of kneading was 150°C. The kneaded material was cooled down to room temperature, and then was again kneaded in a Brabender type mixer at 110°C as the starting temperature for 3 minutes, and then the kneaded material was discharged from the mixer. Next, an open roll was used at 50°C to knead the obtained kneaded material with 1.4 parts of sulfur and 2.4 parts of a cross-linking accelerator (mixture of 1.2 parts of N-tert-butyl-2-benzothiazolylsulfenamide (made by Ouchi Shinko Chemical Industrial Co., Ltd., product name "Nocceler NS-P") and 1.2 parts of 1,3-diphenylguanidine (made by Ouchi Shinko Chemical Industrial Co., Ltd., product name "Nocceler D")), and then the sheet shaped rubber composition was obtained. The obtained rubber composition was evaluated for wet grip and low fuel consumption property. The results are shown in Tables 1 and 2.

### [Example 2]

Except for using 30 parts of the cyclopentene ring-opening polymer obtained in Synthesis Example 2 instead of the cyclopentene ring-opening polymer obtained in Synthesis Example 1, the same method was followed as that in Example 1 to obtain a sheet shaped rubber composition. The obtained rubber composition was evaluated for wet grip and low fuel consumption property. The results are shown in Tables 1 and 2.

### [Example 3]

Except for using 30 parts of the cyclopentene ring-opening polymer obtained in Synthesis Example 3 instead of the cyclopentene ring-opening polymer obtained in Synthesis Example 1, the same method was followed as that in Example 1 to obtain a sheet shaped rubber composition. The obtained rubber composition was evaluated for wet grip and low fuel consumption property. The results are shown in Tables 1 and 2.

### [Example 4]

Except for using 30 parts of the cyclopentene ring-opening polymer obtained in Synthesis Example 4 instead of the cyclopentene ring-opening polymer obtained in Synthesis Example 1, and 70 parts of the amino group-modified solution polymerized styrene-butadiene rubber obtained in Synthesis Example 12 instead of the hydroxyl group-modified solution polymerized styrene-butadiene rubber obtained in Synthesis Example 11, the same method was followed as that in Example 1 to obtain a sheet shaped rubber composition. The obtained rubber composition was evaluated for wet grip and low fuel consumption property. The results are shown in Tables 1 and 2.

### [Example 5]

Except for using 50 parts of the cyclopentene ring-opening polymer obtained in Synthesis Example 4 instead of the cyclopentene ring-opening polymer obtained in Synthesis Example 1, and changing the amount of the hydroxyl group-modified solution polymerized styrene-butadiene rubber obtained in Synthesis Example 11 to 50 parts, the same method was followed as that in Example 1 to obtain a sheet shaped rubber composition. The obtained rubber composition was evaluated for wet grip and low fuel consumption property. The results are shown in Tables 1 and 2.

### [Example 6]

Except for using 30 parts of the cyclopentene ring-opening polymer obtained in Synthesis Example 4 instead of the cyclopentene ring-opening polymer obtained in Synthesis Example 1, the same method was followed as that in Example 1 to obtain a sheet shaped rubber composition. The obtained rubber composition was evaluated for wet grip and low fuel consumption property. The results are shown in Tables 1 and 2.

### [Example 7]

Except for using 30 parts of the cyclopentene ring-opening polymer obtained in Synthesis Example 5 instead of the cyclopentene ring-opening polymer obtained in Synthesis Example 1, the same method was followed as that in Example 1 to obtain a sheet shaped rubber composition. The obtained rubber composition was evaluated for wet grip and low fuel consumption property. The results are shown in Tables 1 and 2.

### [Example 8]

Except for using 30 parts of the cyclopentene ring-opening polymer obtained in Synthesis Example 6 instead of the cyclopentene ring-opening polymer obtained in Synthesis Example 1, the same method was followed as that in Example 1 to obtain a sheet shaped rubber composition. The obtained rubber composition was evaluated for wet grip and low fuel consumption property. The results are shown in Tables 1 and 2.

### [Example 9]

Except for using 30 parts of the cyclopentene ring-opening polymer obtained in Synthesis Example 7 instead of the cyclopentene ring-opening polymer obtained in Synthesis Example 1, the same method was followed as that in Example 1 to obtain a sheet shaped rubber composition. The obtained rubber composition was evaluated for wet grip and low fuel consumption property. The results are shown in Tables 1 and 2.

### [Example 10]

Except for using 30 parts of the cyclopentene ring-opening polymer obtained in Synthesis Example 8 instead of the cyclopentene ring-opening polymer obtained in Synthesis Example 1, the same method was followed as that in Example 1 to obtain a sheet shaped rubber composition. The obtained rubber composition was evaluated for wet grip and low fuel consumption property. The results are shown in Tables 1 and 2.

### [Example 11]

Except for using 30 parts of the cyclopentene ring-opening polymer obtained in Synthesis Example 9 instead of the cyclopentene ring-opening polymer obtained in Synthesis Example 1, the same method was followed as that in Example 1 to obtain a sheet shaped rubber composition. The obtained rubber composition was evaluated for wet grip and low fuel consumption property. The results are shown in Tables 1 and 2.

### [Example 12]

Except for using 30 parts of the cyclopentene ring-opening polymer obtained in Synthesis Example 10 instead of the cyclopentene ring-opening polymer obtained in Synthesis Example 1, the same method was followed as that in Example 1 to obtain a sheet shaped rubber composition. The obtained rubber composition was evaluated for wet grip and low fuel consumption property. The results are shown in Tables 1 and 2.

### [Example 13]

Except for using 10 parts of the cyclopentene ring-opening polymer obtained in Synthesis Example 4 instead of the cyclopentene ring-opening polymer obtained in Synthesis Example 1, and changing the amount of the hydroxyl group-modified solution polymerized styrene-butadiene rubber obtained in Synthesis Example 11 to 90 parts, the same method was followed as that in Example 1 to obtain a sheet shaped rubber composition. The obtained rubber composition was evaluated for wet grip and low fuel consumption property. The results are shown in Tables 1 and 2.

### [Example 14]

In a Brabender type mixer having a volume of 250 ml, 30 parts of the cyclopentene ring-opening polymer obtained in Synthesis Example 6 and 70 parts of the hydroxyl group-modified solution polymerized styrene-butadiene rubber obtained in Synthesis Example 11 were masticated for 30 seconds, then 53 parts of silica (made by Rhodia, product name "Zeosil 1165MP", nitrogen adsorption specific surface area (BET method): 163 m²/g), 25 parts of process oil (made by JX Nippon Oil & Energy Corporation, product name "Aromax T-DAE") and 5.6 parts of a silane coupling agent 1: 3-octanoylthio-1-propyltriethoxysilane (made by Momentive Performance Materials Inc., product name "NXT silane") were added and kneaded at 110°C as the starting temperature for 1.5 minutes, thereafter 17 parts of silica (made by Rhodia, product name "Zeosil 1165MP"), 10 parts of carbon black (made by Tokai Carbon Co., Ltd., product name "Seast 3"), 3 parts of zinc oxide, 2 parts of stearic acid and 2 parts of an antioxidant; N-phenyl-N'-(1,3-dimethylbutyl)-p-phenylenediamine (made by Ouchi Shinko Chemical Industrial Co., Ltd., product name "Nocrac 6C") were added and further kneaded for 2.5 minutes, and then the kneaded material was discharged from the mixer. The temperature of the kneaded material at the time of the end of kneading was 150°C. The kneaded material was cooled down to room temperature, and then was again kneaded in a Brabender type mixer at 110°C as the starting temperature for 3 minutes, and then the kneaded material was discharged from the mixer. Next, an open roll was used at 50°C to knead the obtained kneaded material with 1.5 parts of sulfur and 4 parts of a cross-linking accelerator (mixture of 2 parts of cyclohexyl-2-benzothiazylsulfeneamide (made by Ouchi Shinko Chemical Industrial Co., Ltd., product name "Nocceler CZ-G") and 2 parts of 1,3-diphenylguanidine (made by Ouchi Shinko Chemical Industrial Co., Ltd., product name "Nocceler D")), and then the sheet shaped rubber composition was obtained. The obtained rubber composition was evaluated for wet grip and low fuel consumption property. The results are shown in Tables 1 and 3.

### [Example 15]

Except for changing the amount of the cyclopentene ring-opening polymer obtained in Synthesis Example 6 to 50 parts and the amount of the hydroxyl group-modified solution polymerized styrene-butadiene rubber obtained in Synthesis Example 11 to 50 parts, respectively, the same method was followed as that in Example 14 to obtain a sheet shaped rubber composition. The obtained rubber composition was evaluated for wet grip and low fuel consumption property. The results are shown in Tables 1 and 3.

### [Example 16]

Except for using 5.6 parts of a silane coupling agent represented by the following formula (10) (made by Momentive Performance Materials Inc., product name "NXTZ-45," in the formula (10), x:y = 55:45 (mol%)) as a silane coupling agent instead of 3-octanoylthio-1-propyltriethoxysilane, the same method was followed as that in Example 14 to obtain a sheet shaped rubber composition. The obtained rubber composition was evaluated for wet grip and low fuel consumption property. The results are shown in Tables 1 and 3.

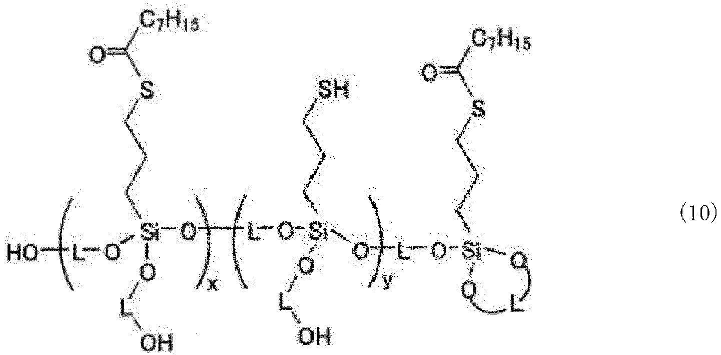

### [Example 17]

Except for using 5.6 parts of a silane coupling agent represented by the following formula (11) (made by Evonik, product name "VP-Si363") as a silane coupling agent instead of 3-octanoylthio-1-propyltriethoxysilane, the same method was followed as that in Example 14 to obtain a sheet shaped rubber composition. The obtained rubber composition was evaluated for wet grip and low fuel consumption property. The results are shown in Tables 1 and 3.

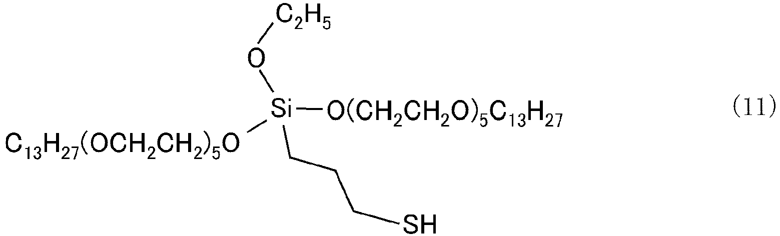

### [Example 18]

Except for changing the amount of silica to 40 parts, the amount of carbon black to 40 parts, and the amount of 3-octanoylthio-1-propyltriethoxysilane to 3.2 parts, respectively, the same method was followed as that in Example 14 to obtain a sheet shaped rubber composition. The obtained rubber composition was evaluated for wet grip and low fuel consumption property. The results are shown in Tables 1 and 3.

### [Example 19]

Except for using 30 parts of the cyclopentene ring-opening polymer obtained in Synthesis Example 10 instead of the cyclopentene ring-opening polymer obtained in Synthesis Example 6, the same method was followed as that in Example 14 to obtain a sheet shaped rubber composition. The obtained rubber composition was evaluated for wet grip and low fuel consumption property. The results are shown in Tables 1 and 3.

### [Example 20]

Except for using 30 parts of the cyclopentene ring-opening polymer obtained in Synthesis Example 1 instead of the cyclopentene ring-opening polymer obtained in Synthesis Example 6, the same method was followed as that in Example 14 to obtain a sheet shaped rubber composition. The obtained rubber composition was evaluated for wet grip and low fuel consumption property. The results are shown in Tables 1 and 3.

### [Example 21]

Except for using 5.6 parts of bis-3-triethoxysilylpropyltetrasulfide (made by Evonik, product name "Si69") as a silane coupling agent instead of 3-octanoylthio-1-propyltriethoxysilane, the same method was followed as that in Example 14 to obtain a sheet shaped rubber composition. The obtained rubber composition was evaluated for wet grip and low fuel consumption property. The results are shown in Tables 1 and 3.

### [Comparative Example 1]

Except for using 96 parts of emulsion polymerized styrene-butadiene rubber (product name "Nipol SBR1739," made by Zeon Corporation, amount of bonded styrene 40 wt%, Mooney viscosity (ML₁₊₄, 100°C) 49, unmodified rubber, containing 37.5 parts of extension oil with respect to 100 parts of a polymer forming a rubber component) (containing 70 parts of a polymer forming a rubber component) instead of the hydroxyl group-modified solution polymerized styrene-butadiene rubber obtained in Synthesis Example 11, and not using process oil (made by JX Nippon Oil & Energy Corporation, product name "Aromax T-DAE"), the same method was followed as that in Example 1 to obtain a sheet shaped rubber composition. The obtained rubber composition was evaluated for wet grip and low fuel consumption property. The results are shown in Tables 1 and 3.

### [Comparative Example 2]

Except for using 96 parts of emulsion polymerized styrene-butadiene rubber (product name "Nipol SBR1739," made by Zeon Corporation, amount of bonded styrene 40 wt%, Mooney viscosity (ML₁₊₄, 100°C) 49, unmodified rubber, containing 37.5 parts of extension oil with respect to 100 parts of a polymer forming a rubber component) (containing 70 parts of a polymer forming a rubber component) instead of the hydroxyl group-modified solution polymerized styrene-butadiene rubber obtained in Synthesis Example 11, and not using process oil (made by JX Nippon Oil & Energy Corporation, product name "Aromax T-DAE"), the same method was followed as that in Example 2 to obtain a sheet shaped rubber composition. The obtained rubber composition was evaluated for wet grip and low fuel consumption property. The results are shown in Tables 1 and 3.

### [Comparative Example 3]

Except for using 96 parts of emulsion polymerized styrene-butadiene rubber (product name "Nipol SBR1739," made by Zeon Corporation, amount of bonded styrene 40 wt%, Mooney viscosity (ML₁₊₄, 100°C) 49, unmodified rubber, containing 37.5 parts of extension oil with respect to 100 parts of a polymer forming a rubber component) (containing 70 parts of a polymer forming a rubber component) instead of the hydroxyl group-modified solution polymerized styrene-butadiene rubber obtained in Synthesis Example 11, and not using process oil (made by JX Nippon Oil & Energy Corporation, product name "Aromax T-DAE"), the same method was followed as that in Example 3 to obtain a sheet shaped rubber composition. The obtained rubber composition was evaluated for wet grip and low fuel consumption property. The results are shown in Tables 1 and 3.

### [Comparative Example 4]

Except for using 96 parts of emulsion polymerized styrene-butadiene rubber (product name "Nipol SBR1723," made by Zeon Corporation, amount of bonded styrene 23.5 wt%, Mooney viscosity (ML₁₊₄, 100°C) 47, unmodified rubber, containing 37.5 parts of extension oil with respect to 100 parts of a polymer forming a rubber component) (containing 70 parts of a polymer forming a rubber component) instead of the hydroxyl group-modified solution polymerized styrene-butadiene rubber obtained in Synthesis Example 11, and not using process oil (made by JX Nippon Oil & Energy Corporation, product name "Aromax T-DAE"), the same method was followed as that in Example 4 to obtain a sheet shaped rubber composition. The obtained rubber composition was evaluated for wet grip and low fuel consumption property. The results are shown in Tables 1 and 3.

### [Comparative Example 5]

Except for using 69 parts of emulsion polymerized styrene-butadiene rubber (product name "Nipol SBR1739," made by Zeon Corporation, amount of bonded styrene 40 wt%, Mooney viscosity (ML₁₊₄, 100°C) 49, unmodified rubber, containing 37.5 parts of extension oil with respect to 100 parts of a polymer forming a rubber component) (containing 50 parts of a polymer forming a rubber component) instead of the hydroxyl group-modified solution polymerized styrene-butadiene rubber obtained in Synthesis Example 11, and changing the amount of process oil (made by JX Nippon Oil & Energy Corporation, product name "Aromax T-DAE") to 6 parts, the same method was followed as that in Example 5 to obtain a sheet shaped rubber composition. The obtained rubber composition was evaluated for wet grip and low fuel consumption property. The results are shown in Tables 1 and 3.

### [Table 1]

**Table 1**

| | Cyclopentene ring-opening polymer | | | | | | | | Styrene-butadiene rubber | | | | | | Cyclopentene ring-opening polymer : Styrene-butadiene rubber (weight ratio) |
|---|---|---|---|---|---|---|---|---|---|---|---|---|---|---|---|
| | Synthesis Example | Weight average molecular weight [Mw] | Molecular weight distribution [Mw/Mn] | Cis/trans ratio | Type of oxysilyl group introduced | Ratio of introduction of oxysilyl group (%) | Glass transition temperature (° C) | Melting point (° C) | Synthesis Example/ product name | Polymerization method | Amount of bonded styrene (%) | Mooney viscosity [ML₁₊₄, 100° C] | Functional group introduced by modification | Glass transition temperature (° C) | |
| Example 1 | 1 | 363.000 | 1.88 | 52/48 | Triethoxysilyl group | 35 | -106 | None | 11 | Solution polymerization | 21 | 62 | Hydroxyl group | -25 | 30:70 |
| Example 2 | 2 | 405.000 | 2.03 | 76/24 | Tri(trimethylsiloxy) silyl group | 48 | -109 | None | 11 | Solution polymerization | 21 | 62 | Hydroxyl group | -25 | 30:70 |
| Example 3 | 3 | 389.000 | 1.99 | 81/19 | - | 0 | -110 | None | 11 | Solution polymerization | 21 | 62 | Hydroxyl group | -25 | 30:70 |
| Example 4 | 4 | 337,000 | 1.77 | 42/58 | Triethoxysilyl group | 28 | -105 | -17 | 12 | Solution polymerization | 21 | 45 | Amino group | -25 | 30:70 |
| Example 5 | 4 | 337,000 | 1.77 | 42/58 | Triethoxysilyl group | 28 | -105 | -17 | 11 | Solution polymerization | 21 | 62 | Hydroxyl group | -25 | 50:50 |
| Example 6 | 4 | 337,000 | 1.77 | 42/58 | Triethoxysilyl group | 28 | -105 | -17 | 11 | Solution polymerization | 21 | 62 | Hydroxyl group | -25 | 30:70 |
| Example 7 | 5 | 382,000 | 2.78 | 42/58 | - | 0 | -105 | -7 | 11 | Solution polymerization | 21 | 62 | Hydroxyl group | -25 | 30:70 |
| Example 8 | 6 | 366,000 | 1.90 | 55/45 | Triethoxysilyl group | 72 | -107 | None | 11 | Solution polymerization | 21 | 62 | Hydroxyl group | -25 | 30:70 |
| Example 9 | 7 | 337,000 | 1.88 | 59/41 | Triethoxysilyl group | 97 | -106 | None | 11 | Solution polymerization | 21 | 62 | Hydroxyl group | -25 | 30:70 |
| Example 10 | 8 | 266,000 | 2.01 | 64/36 | Triethoxysilyl group | 94 | -107 | None | 11 | Solution polymerization | 21 | 62 | Hydroxyl group | -25 | 30:70 |
| Example 11 | 9 | 443,000 | 1.78 | 76/24 | Triethoxysilyl group | 98 | -109 | None | 11 | Solution polymerization | 21 | 62 | Hydroxyl group | -25 | 30:70 |
| Example 12 | 10 | 394,000 | 1.92 | 38/62 | Triethoxysilyl group | 94 | -105 | -13 | 11 | Solution polymerization | 21 | 62 | Hydroxyl group | -25 | 30:70 |
| Example 13 | 4 | 337,000 | 1.77 | 42/58 | Triethoxysilyl group | 28 | -105 | -17 | 11 | Solution polymerization | 21 | 62 | Hydroxyl group | -25 | 10:90 |
| Example 14 | 6 | 366,000 | 1.90 | 55/45 | Triethoxysilyl group | 72 | -107 | None | 11 | Solution polymerization | 21 | 62 | Hydroxyl group | -25 | 30:70 |
| Example 15 | 6 | 366,000 | 1.90 | 55/45 | Triethoxysilyl group | 72 | -107 | None | 11 | Solution polymerization | 21 | 62 | Hydroxyl group | -25 | 50:50 |
| Example 16 | 6 | 366,000 | 1.90 | 55/45 | Triethoxysilyl group | 72 | -107 | None | 11 | Solution polymerization | 21 | 62 | Hydroxyl group | -25 | 30:70 |
| Example 17 | 6 | 366,000 | 1.90 | 55/45 | Triethoxysilyl group | 72 | -107 | None | 11 | Solution polymerization | 21 | 62 | Hydroxyl group | -25 | 30:70 |
| Example 18 | 6 | 366,000 | 1.90 | 55/45 | Triethoxysilyl group | 72 | -107 | None | 11 | Solution polymerization | 21 | 62 | Hydroxyl group | -25 | 30:70 |
| Example 19 | 10 | 394,000 | 1.90 | 38/62 | Triethoxysilyl group | 94 | -105 | -13 | 11 | Solution polymerization | 21 | 62 | Hydroxyl group | -25 | 30:70 |
| Example 20 | 1 | 363.000 | 1.88 | 52/48 | Triethoxysilyl group | 35 | -106 | None | 11 | Solution polymerization | 21 | 62 | Hydroxyl group | -25 | 30:70 |
| Example 21 | 6 | 366,000 | 1.90 | 55/45 | Triethoxysilyl group | 72 | -107 | None | 11 | Solution polymerization | 21 | 62 | Hydroxyl group | -25 | 30:70 |
| Comparative Example 1 | 1 | 363.000 | 1.88 | 52/48 | Triethoxysilyl group | 35 | -106 | None | SBR1739 | Emulsion polymerization | 40 | 49 | - | -35 | 30:70 |
| Comparative Example 2 | 2 | 405.000 | 2.03 | 76/24 | Tri(trimethylsiloxy) silyl group | 48 | -109 | None | SBR1739 | Emulsion polymerization | 40 | 49 | - | -35 | 30:70 |
| Comparative Example 3 | 3 | 389.000 | 1.99 | 81/19 | - | 0 | -110 | None | SBR1739 | Emulsion polymerization | 40 | 49 | - | -35 | 30:70 |
| Comparative Example 4 | 4 | 337,000 | 1.77 | 42/58 | Triethoxysilyl group | 28 | -105 | -17 | SBR1723 | Emulsion polymerization | 23.5 | 47 | - | -50 | 30:70 |
| Comparative Example 5 | 4 | 337,000 | 1.77 | 42/58 | Triethoxysilyl group | 28 | -105 | -17 | SBR1739 | Emulsion polymerization | 40 | 49 | - | -35 | 50:50 |

### [Table 2]

**Table 2**

| | | | Example | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Type of cyclopentene ring-opening polymer | | | Synthesis Example 1 | Synthesis Example 2 | Synthesis Example 3 | Synthesis Example 4 | Synthesis Example 4 | Synthesis Example 4 | Synthesis Example 5 | Synthesis Example 6 | Synthesis Example 7 | Synthesis Example 8 | Synthesis Example 9 | Synthesis Example 10 | Synthesis Example 4 |
| Type of styrene-butadiene rubber | | | Synthesis Example 11 | Synthesis Example 11 | Synthesis Example 11 | Synthesis Example 12 | Synthesis Example 11 | Synthesis Example 11 | Synthesis Example 11 | Synthesis Example 11 | Synthesis Example 11 | Synthesis Example 11 | Synthesis Example 11 | Synthesis Example 11 | Synthesis Example 11 |
| Composition of rubber composition | | | | | | | | | | | | | | | |
| | Cyclopentene ring-opening polymer | (parts) | 30 | 30 | 30 | 30 | 50 | 30 | 30 | 30 | 30 | 30 | 30 | 30 | 10 |
| | Styrene-butadiene rubber | (parts) | 70 | 70 | 70 | 70 | 50 | 70 | 70 | 70 | 70 | 70 | 70 | 70 | 90 |
| | Silica | (parts) | 80 | 80 | 80 | 80 | 80 | 80 | 80 | 80 | 80 | 80 | 80 | 80 | 80 |
| | Carbon black | (parts) | - | - | - | - | - | - | - | - | - | - | - | - | - |
| | Silane coupling agent (Si69) | (parts) | 6 | 6 | 6 | 6 | 6 | 6 | 6 | 6 | 6 | 6 | 6 | 6 | 6 |
| | Silane coupling agent (TXT) | (parts) | - | - | - | - | - | - | - | - | - | - | - | - | - |
| | Silane coupling agent (TXT-Z45) | (parts) | - | | - | | - | | - | | - | - | - | | |
| | Silane coupling agent (VP-Si363) | (parts) | - | - | - | - | - | - | - | - | - | - | - | - | - |
| | Process oil | (parts) | 25 | 25 | 25 | 25 | 25 | 25 | 25 | 25 | 25 | 25 | 25 | 25 | 25 |
| | Zinc oxide | (parts) | 3 | 3 | 3 | 3 | 3 | 3 | 3 | 3 | 3 | 3 | 3 | 3 | 3 |
| | Stearic acid | (parts) | 2 | 2 | 2 | 2 | 2 | 2 | 2 | 2 | 2 | 2 | 2 | 2 | 2 |
| | Antioxidant | (parts) | 2 | 2 | 2 | 2 | 2 | 2 | 2 | 2 | 2 | 2 | 2 | 2 | 2 |
| | Cross-linking accelerator | (parts) | 2.4 | 2.4 | 2.4 | 2.4 | 2.4 | 2.4 | 2.4 | 2.4 | 2.4 | 2.4 | 2.4 | 2.4 | 2.4 |
| | Cross-linking agent | (parts) | 1.4 | 1.4 | 1.4 | 1.4 | 1.4 | 1.4 | 1.4 | 1.4 | 1.4 | 1.4 | 1.4 | 1.4 | 1.4 |

| Evaluation | | | | | | | | | | | | | | | |
|---|---|---|---|---|---|---|---|---|---|---|---|---|---|---|---|
| | Wet grip | | 137 | 110 | 109 | 113 | 109 | 146 | 159 | 165 | 161 | 156 | 150 | 174 | 199 |
| | Low heat buildup property | | 135 | 109 | 108 | 111 | 131 | 109 | 107 | 138 | 137 | 132 | 128 | 118 | 110 |

### [Table 3]

**Table 3**

| | | | Example | | | | | | | | Comparative Example | | | | |
|---|---|---|---|---|---|---|---|---|---|---|---|---|---|---|---|
| | | | 14 | 15 | 16 | 17 | 18 | 19 | 20 | 21 | 1 | 2 | 3 | 4 | 5 |
| Type of cyclopentene ring-opening polymer | | | Synthesis Example 6 | Synthesis Example 6 | Synthesis Example 6 | Synthesis Example 6 | Synthesis Example 6 | Synthesis Example 10 | Synthesis Example 1 | Synthesis Example 6 | Synthesis Example 1 | Synthesis Example 2 | Synthesis Example 3 | Synthesis Example 4 | Synthesis Example 4 |
| Type of styrene-butadiene rubber | | | Synthesis Example 11 | Synthesis Example 11 | Synthesis Example 11 | Synthesis Example 11 | Synthesis Example 11 | Synthesis Example 11 | Synthesis Example 11 | Synthesis Example 11 | SBR 1739 | SBR 1739 | SBR 1739 | SBR 1723 | SBR 1739 |
| Composition of rubber composition | | | | | | | | | | | | | | | |
| | Cyclopentene ring-opening polymer | (parts) | 30 | 50 | 30 | 30 | 30 | 30 | 30 | 30 | 30 | 30 | 30 | 30 | 50 |
| | Styrene-butadiene rubber | (parts) | 70 | 50 | 70 | 70 | 70 | 70 | 70 | 70 | 70 | 70 | 70 | 70 | 50 |
| | Silica | (parts) | 70 | 70 | 70 | 70 | 40 | 70 | 70 | 70 | 80 | 80 | 80 | 80 | 80 |
| | Carbon black | (parts) | 10 | 10 | 10 | 10 | 40 | 10 | 10 | 10 | - | - | - | - | - |
| | Silane coupling agent (Si69) | (parts) | - | - | - | - | - | - | - | 5.6 | 6 | 6 | 6 | 6 | 6 |
| | Silane coupling agent (TXT) | (parts) | 5.6 | 5.6 | - | - | 3.2 | 5.6 | 5.6 | - | - | - | - | - | - |
| | Silane coupling agent (TXT-Z45) | (parts) | - | - | 5.6 | - | - | - | - | - | - | - | - | - | - |
| | Silane coupling agent (VP-Si363) | (parts) | - | - | - | 5.6 | - | - | - | - | - | - | - | - | - |
| | Process oil | (parts) | 25 | 25 | 25 | 25 | 25 | 25 | 25 | 25 | - | - | - | - | 6 |
| | Zinc oxide | (parts) | 3 | 3 | 3 | 3 | 3 | 3 | 3 | 3 | 3 | 3 | 3 | 3 | 3 |
| | Stearic acid | (parts) | 2 | 2 | 2 | 2 | 2 | 2 | 2 | 2 | 2 | 2 | 2 | 2 | 2 |
| | Antioxidant | (parts) | 2 | 2 | 2 | 2 | 2 | 2 | 2 | 2 | 2 | 2 | 2 | 2 | 2 |
| | Cross-linking accelerator | (parts) | 4 | 4 | 4 | 4 | 4 | 4 | 4 | 4 | 2.4 | 2.4 | 2.4 | 2.4 | 2.4 |
| | Cross-linking agent | (parts) | 1.5 | 1.5 | 1.5 | 1.5 | 1.5 | 1.5 | 1.5 | 1.5 | 1.4 | 1.4 | 1.4 | 1.4 | 1.4 |

| Evaluation | | | | | | | | | | | | | | | |
|---|---|---|---|---|---|---|---|---|---|---|---|---|---|---|---|
| | Wet grip | | 164 | 141 | 158 | 162 | 125 | 168 | 145 | 139 | 100 | 82 | 84 | 80 | 78 |
| | Low heat buildup property | | 141 | 152 | 148 | 145 | 114 | 122 | 138 | 130 | 100 | 92 | 72 | 98 | 94 |

### [Evaluation of Examples 1 to 21 and Comparative Examples 1 to 5]

As clear from the results shown in Tables 1 to 3, the rubber composition for a tire of the present invention containing a cyclopentene ring-opening polymer and solution polymerized styrene-butadiene rubber gave a cross-linked rubber excellent in wet grip and low heat buildup property (Examples 1 to 21).

Among these, in Examples 14 to 17, 19 and 20, the amount of the silica was set to a predetermined amount or more, a compound containing a monosulfide group and/or a thiol group was used as a silane coupling agent, and particularly good results in wet grip and low heat buildup property were obtained.

On the other hand, each rubber composition (Comparative Examples 1 to 5) where each emulsion polymerized styrene-butadiene rubber was used instead of the solution polymerized styrene-butadiene rubber gave a cross-linked rubber inferior in wet grip and low heat buildup property as compared with the rubber composition for a tire of the present invention.

### [Example 22]

In a Brabender type mixer having a volume of 250 ml, 30 parts of the cyclopentene ring-opening polymer (both-end-modified cyclopentene ring-opening polymer having triethoxysilyl groups at ends of both sides of the polymer chain) obtained in Synthesis Example 6, 55 parts of styrene-butadiene rubber (b1) (made by Zeon Corporation, product name "Nipol NS460", oil-extended solution-polymerized SBR, amount of bonded styrene 25 wt%, vinyl bond content of butadiene units portion 63%, Mooney viscosity (ML₁₊₄, 100°C) 62, glass transition temperature (Tg) -20°C, amount of oil extended 37.5 parts) (40 parts as styrene-butadiene rubber) and 30 parts of natural rubber (SMR-CV60) were masticated for 30 seconds, then 53.3 parts of silica (made by Solvay, product name "Zeosil 1085GR", nitrogen adsorption specific surface area (BET method): 90 m²/g, primary particle size: 30 nm), 25 parts of process oil (made by JX Nippon Oil & Energy Corporation, product name "Aromax T-DAE") and 4.0 parts of a silane coupling agent: bis-3-triethoxysilylpropyltetrasulfide (made by Evonik, product name "Si69") were added and kneaded at 110°C as the starting temperature for 1.5 minutes, thereafter 26.7 parts of silica having a nitrogen adsorption specific surface area of 90 m²/g (made by Solvay, product name "Zeosil 1085GR"), 10 parts of carbon black (made by Tokai Carbon Co., Ltd., product name "Seast 7HM"), 3 parts of zinc oxide, 2 parts of stearic acid and 2 parts of an antioxidant: N-phenyl-N'-(1,3-dimethylbutyl)-p-phenylenediamine (made by Ouchi Shinko Chemical Industrial Co., Ltd., product name "Nocrac 6C") were added and further kneaded for 2.5 minutes, and then the kneaded material was discharged from the mixer. The temperature of the kneaded material at the time of the end of kneading was 150°C. The kneaded material was cooled down to room temperature, then was again kneaded in a Brabender type mixer at 110°C as the starting temperature for 3 minutes, and then the kneaded material was discharged from the mixer. Next, an open roll was used at 50°C to knead the obtained kneaded material with 1.5 parts of sulfur, 2 parts of a cross-linking accelerator: cyclohexyl-2-benzothiazolylsulfenamide (made by Ouchi Shinko Chemical Industrial Co., Ltd., product name "Nocceler CZ-G") and 2 parts of a cross-linking accelerator: 1,3-diphenylguanidine (made by Ouchi Shinko Chemical Industrial Co., Ltd., product name "Nocceler D"), and then the sheet shaped rubber composition was obtained. Further, the obtained rubber composition was evaluated for wet grip, low heat buildup property and ice grip according to the above methods. The results are shown in Table 5.

### [Example 23]

Except for changing the amount of the cyclopentene ring-opening polymer obtained in Synthesis Example 6 (both-end-modified cyclopentene ring-opening polymer having triethoxysilyl groups at ends of both sides of the polymer chain) from 30 parts to 40 parts, and the amount of natural rubber from 30 parts to 20 parts, respectively, the same method was followed as that in Example 22 to obtain a sheet shaped rubber composition. Further, the obtained rubber composition was evaluated for wet grip, low heat buildup property and ice grip according to the above methods. The results are shown in Table 5.

### [Example 24]

Except for changing the amount of the cyclopentene ring-opening polymer obtained in Synthesis Example 6 (both-end-modified cyclopentene ring-opening polymer having triethoxysilyl groups at ends of both sides of the polymer chain) from 30 parts to 20 parts, and the amount of natural rubber from 30 parts to 40 parts, respectively, the same method was followed as that in Example 22 to obtain a sheet shaped rubber composition. Further, the obtained rubber composition was evaluated for wet grip, low heat buildup property and ice grip according to the above methods. The results are shown in Table 5.

### [Example 25]

Except for changing the amount of the cyclopentene ring-opening polymer obtained in Synthesis Example 6 (both-end-modified cyclopentene ring-opening polymer having triethoxysilyl groups at ends of both sides of the polymer chain) from 30 parts to 15 parts, and the amount of natural rubber from 30 parts to 45 parts, respectively, the same method was followed as that in Example 22 to obtain a sheet shaped rubber composition. Further, the obtained rubber composition was evaluated for wet grip, low heat buildup property and ice grip according to the above methods. The results are shown in Table 5.

### [Example 26]

Except for using 30 parts of the cyclopentene ring-opening polymer obtained in Synthesis Example 1 (one-end-modified cyclopentene ring-opening polymer having a triethoxysilyl group at an end of one side) instead of 30 parts of the cyclopentene ring-opening polymer obtained in Synthesis Example 6 (both-end-modified cyclopentene ring-opening polymer having triethoxysilyl groups at ends of both sides of the polymer chain), the same method was followed as that in Example 22 to obtain a sheet shaped rubber composition. Further, the obtained rubber composition was evaluated for wet grip, low heat buildup property and ice grip according to the above methods. The results are shown in Table 5.

### [Comparative Example 6]

Except for using 30 parts of polybutadiene rubber (made by Zeon Corporation, product name "Nipol BR1220," cis content 97%, Mooney viscosity (ML₁₊₄, 100°C) 43, glass transition temperature (Tg) -110°C) instead of 30 parts of the cyclopentene ring-opening polymer obtained in Synthesis Example 6 (both-end-modified cyclopentene ring-opening polymer having triethoxysilyl groups at ends of both sides of the polymer chain), the same method was followed as that in Example 22 to obtain a sheet shaped rubber composition. Further, the obtained rubber composition was evaluated for wet grip, low heat buildup property and ice grip according to the above methods. The results are shown in Table 5.

### [Reference Example 1]

Except for changing the amount of the cyclopentene ring-opening polymer obtained in Synthesis Example 6 (both-end-modified cyclopentene ring-opening polymer having triethoxysilyl groups at ends of both sides of the polymer chain) from 30 parts to 60 parts, and not compounding natural rubber, the same method was followed as that in Example 22 to obtain a sheet shaped rubber composition. Further, the obtained rubber composition was evaluated for wet grip, low heat buildup property and ice grip according to the above methods. The results are shown in Table 5.

### [Reference Example 2]

Except for using 55 parts of styrene-butadiene rubber (b2) (made by Zeon Corporation, product name "Nipol NS522", oil-extended solution-polymerized SBR, amount of bonded styrene 39 wt%, vinyl bond content of butadiene units portion 40%, Mooney viscosity (ML₁₊₄, 100°C) 62, glass transition temperature (Tg) -23°C, amount of oil extended 37.5 parts) (40 parts as styrene-butadiene rubber) instead of 55 parts of styrene-butadiene rubber (b1) (40 parts as styrene-butadiene rubber), the same method was followed as that in Example 22 to obtain a sheet shaped rubber composition. Further, the obtained rubber composition was evaluated for wet grip, low heat buildup property and ice grip according to the above methods. The results are shown in Table 5.

### [Table 4]

**Table 4**

| | Synthesis Example | |
|---|---|---|
| | 6 | 1 |
| Weight average molecular weight [Mw] | 366,000 | 363.000 |
| Cis/trans ratio | 55/45 | 52/48 |
| Type of end functional group introduced | Triethoxysilyl group | Triethoxysilyl group |
| Ratio of introduction of oxysilyl group (%) | 72 | 35 |
| Glass transition temperature (° C) | -107 | -106 |
| Melting point (° C) | None | None |

### [Table 5]

**Table 5**

| | | | Example | | | | | Comparative Example | Reference Example | |
|---|---|---|---|---|---|---|---|---|---|---|
| | | | 22 | 23 | 24 | 25 | 26 | 6 | 1 | 2 |
| Composition of rubber composition | | | | | | | | | | |
| | Triethoxysilyl group-both-end-modified cyclopentene ring-opening polymer | (parts) | 30 | 40 | 20 | 15 | | | 60 | 30 |
| | Triethoxysilyl group-one-end-modified cyclopentene ring-opening polymer | (parts) | | | | | 30 | | | |
| | Styrene-butadiene rubber (b1) (amount of bonded styrene: 25 wt%) | (parts) | 40 (55)* | 40 (55)* | 40 (55)* | 40 (55)* | 40 (55)* | 40 (55)* | 40 (55)* | |
| | Styrene-butadiene rubber (b2) (amount of bonded styrene: 39 wt%) | (parts) | | | | | | | | 40 (55)* |
| | Natural rubber | (parts) | 30 | 20 | 40 | 45 | 30 | 30 | | 30 |
| | Polybutadiene rubber | (parts) | | | | | | 30 | | |
| | Silica (Zeosil1085GR, specific surface area: 90m²/g) | (parts) | 80 | 80 | 80 | 80 | 80 | 80 | 80 | 80 |
| | Carbon black | (parts) | 10 | 10 | 10 | 10 | 10 | 10 | 10 | 10 |
| | Silane coupling agent (Si69) | (parts) | 4 | 4 | 4 | 4 | 4 | 4 | 4 | 4 |
| | Process oil | (parts) | 25 | 25 | 25 | 25 | 25 | 25 | 25 | 25 |
| | Zinc oxide | (parts) | 3 | 3 | 3 | 3 | 3 | 3 | 3 | 3 |
| | Stearic acid | (parts) | 2 | 2 | 2 | 2 | 2 | 2 | 2 | 2 |
| | Antioxidant | (parts) | 2 | 2 | 2 | 2 | 2 | 2 | 2 | 2 |
| | Cyclohexyl-2-benzothiazolylsulfenamide | (parts) | 2 | 2 | 2 | 2 | 2 | 2 | 2 | 2 |
| | 1,3-Diphenylguanidine | (parts) | 2 | 2 | 2 | 2 | 2 | 2 | 2 | 2 |
| | Sulfur | (parts) | 1.5 | 1.5 | 1.5 | 1.5 | 1.5 | 1.5 | 1.5 | 1.5 |

| Evaluation | | | | | | | | | | |
|---|---|---|---|---|---|---|---|---|---|---|
| | Wet grip | | 166 | 175 | 156 | 135 | 149 | 100 | 183 | 194 |
| | Low heat buildup property | | 130 | 135 | 124 | 122 | 121 | 100 | 147 | 128 |
| | Ice grip | | 119 | 114 | 125 | 129 | 112 | 100 | 86 | 80 |

| | | | | | | | | | | |
|---|---|---|---|---|---|---|---|---|---|---|
| * parts by weight of oil-extended rubber (parts by weight in combination of styrene-butadiene rubber with extension oil) | | | | | | | | | | |

### [Evaluation of Examples 22 to 26, Comparative Example 6, and Reference Examples 1 and 2]

In Table 4, cyclopentene ring-opening polymers used in Examples 22 to 26 are collectively shown.

As clear from the results shown in Tables 4 and 5, each rubber composition containing an end functional group-containing cyclopentene ring-opening polymer and styrene-butadiene rubber where the amount of bonded styrene was 5 to 35 wt%, in which the content ratios thereof were in predetermined ranges, gave a cross-linked rubber excellent in wet grip and low heat buildup property, and also enhanced in ice grip (Examples 22 to 26) .

On the other hand, when a rubber composition to which polybutadiene rubber was compounded instead of the end functional group-containing cyclopentene ring-opening polymer was used, the obtained cross-linked rubber was inferior in wet grip, low heat buildup property and ice grip (Comparative Example 6).

Further, when the content of the end functional group-containing cyclopentene ring-opening polymer was too large and when styrene-butadiene rubber where the amount of bonded styrene was more than 35 wt% was used, the cross-linked rubber obtained by using such a rubber composition was small in the improvement effect of ice grip (Reference Examples 1 and 2).

## Claims

1. A rubber composition for a tire, comprising a cyclopentene ring-opening polymer and a solution polymerized styrene-butadiene rubber, wherein the solution polymerized styrene-butadiene rubber is a modified solution polymerized styrene-butadiene rubber in which a hydroxyl group or an amino group is introduced as a modified group.

2. The rubber composition for a tire according to claim 1, wherein an amount of bonded styrene in the solution polymerized styrene-butadiene rubber is 5 wt% or more and 50 wt% or less.

3. The rubber composition for a tire according to claim 2, wherein the amount of bonded styrene in the solution polymerized styrene-butadiene rubber is 5 wt% or more and 30 wt% or less.

4. The rubber composition for a tire according to claim 3, wherein the amount of bonded styrene in the solution polymerized styrene-butadiene rubber is 15 wt% or more and 30 wt% or less.

5. The rubber composition for a tire according to any one of claims 1 to 4, wherein the vinyl bond content of the butadiene monomer units contained in the solution polymerized styrene-butadiene rubber is 40 to 70 mol%.

6. The rubber composition for a tire according to any one of claims 1 to 5, wherein a content ratio of the cyclopentene ring-opening polymer and the solution polymerized styrene-butadiene rubber in terms of a weight ratio of (cyclopentene ring-opening polymer : solution polymerized styrene-butadiene rubber) is 5:95 to 90:10.

7. The rubber composition for a tire according to any one of claims 1 to 6, wherein the cyclopentene ring-opening polymer includes an end functional group-containing cyclopentene ring-opening polymer in which a functional group is introduced to an end of a polymer chain.

8. The rubber composition for a tire according to claim 7, wherein the end functional group-containing cyclopentene ring-opening polymer contains an oxysilyl group as the functional group at an end of a polymer chain.

9. The rubber composition for a tire according to any one of claims 1 to 8, wherein the solution polymerized styrene-butadiene rubber is a modified solution polymerized styrene-butadiene rubber having a group introduced by a reaction of at least one of the compounds represented by the following general formulas (1) to (3) with a polymer chain of a solution polymerized styrene-butadiene copolymer having an active end: 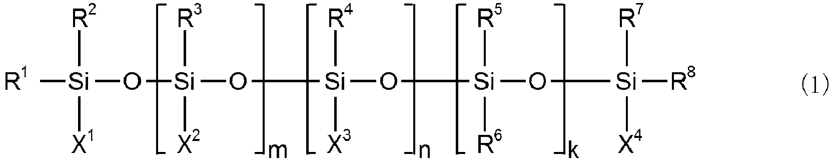 where, in the above general formula (1), each of R¹ to R⁸ represents an alkyl group having 1 to 6 carbon atoms or an aryl group having 6 to 12 carbon atoms, and R¹ to R⁸ may be the same as or different from each other; each of X¹ and X⁴ represents a functional group able to react with the active end of the polymer chain, an alkyl group having 1 to 6 carbon atoms, or an aryl group having 6 to 12 carbon atoms, and X¹ and X⁴ may be the same as or different from each other; X² represents a functional group able to react with the active end of the polymer chain; X³ represents a group containing 2 to 20 alkyleneglycol repeating units; and "m" is an integer of 3 to 200, "n" is an integer of 0 to 200, and "k" is an integer of 0 to 200; 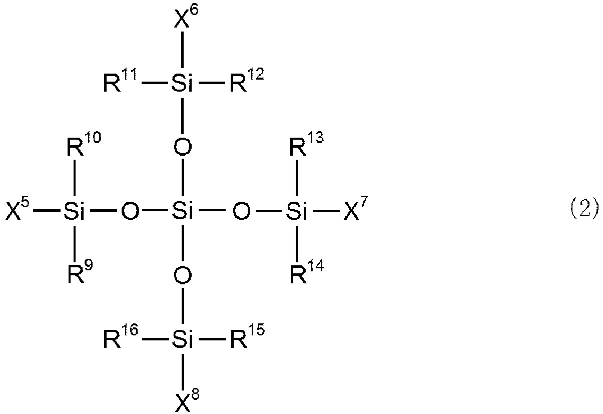 where, in the above general formula (2), each of R⁹ to R¹⁶ represents an alkyl group having 1 to 6 carbon atoms or an aryl group having 6 to 12 carbon atoms, and R⁹ to R¹⁶ may be the same as or different from each other; and each of X⁵ to X⁸ represents a functional group able to react with the active end of the polymer chain; 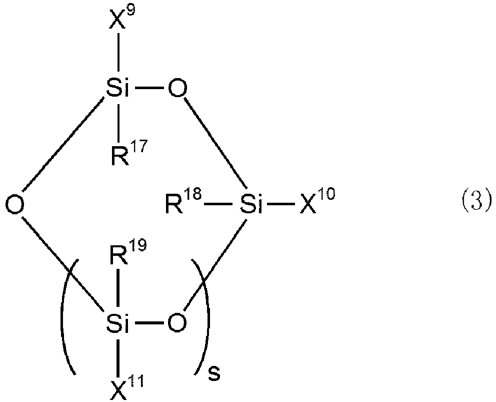 where, in the above general formula (3), each of R¹⁷ to R¹⁹ represents an alkyl group having 1 to 6 carbon atoms or an aryl group having 6 to 12 carbon atoms, and R¹⁷ to R¹⁹ may be the same as or different from each other; each of X⁹ to X¹¹ represents a functional group able to react with the active end of the polymer chain; and "s" is an integer of 1 to 18.

10. The rubber composition for a tire according to any one of claims 1 to 9, further comprising a silica in a ratio of 1 part by weight or more and 200 parts by weight or less with respect to 100 parts by weight of a rubber component contained in the rubber composition for a tire.

11. The rubber composition for a tire according to claim 10, further comprising a silane coupling agent in a ratio of 0.1 part by weight or more and 30 parts by weight or less with respect to 100 parts by weight of the silica.

12. The rubber composition for a tire according to claim 11, wherein the silane coupling agent is a silane coupling agent including a monosulfide group and/or a thiol group.

13. The rubber composition for a tire according to claim 1, wherein
the cyclopentene ring-opening polymer is an end functional group-containing cyclopentene ring-opening polymer in which a functional group is introduced to an end of a polymer chain,
an amount of bonded styrene in the solution polymerized styrene-butadiene rubber is 5 to 35 wt%, and
in a rubber component contained in the rubber composition for a tire, a content ratio of the end functional group-containing cyclopentene ring-opening polymer is 10 to 55 wt% and a content ratio of the solution polymerized styrene-butadiene rubber is 30 to 75 wt%.

14. The rubber composition for a tire according to claim 13, further comprising at least one rubber selected from natural rubber, polyisoprene rubber and polybutadiene rubber.

15. The rubber composition for a tire according to claim 13 or 14, further comprising a silica in a ratio of 30 to 200 parts by weight with respect to 100 parts by weight of the rubber component contained in the rubber composition for a tire.

16. The rubber composition for a tire according to claim 15, wherein a nitrogen adsorption specific surface area of the silica, measured by a BET method, is 100 m²/g or less.

17. The rubber composition for a tire according to any one of claims 13 to 16, wherein the end functional group-containing cyclopentene ring-opening polymer contains an oxysilyl group as the functional group at an end of a polymer chain.

18. A cross-linked rubber obtained by cross-linking the rubber composition for a tire according to any one of claims 1 to 17.

19. A tire comprising the cross-linked rubber according to claim 18.

## Patentansprüche

1. Kautschukzusammensetzung für einen Reifen, umfassend ein Cyclopenten-Ringöffnungspolymer und einen in Lösung polymerisierten Styrol-Butadien-Kautschuk, wobei der in Lösung polymerisierte Styrol-Butadien-Kautschuk ein modifizierter in Lösung polymerisierter Styrol-Butadien-Kautschuk ist, in dem eine Hydroxylgruppe oder eine Aminogruppe als eine modifizierte Gruppe eingeführt ist.

2. Die Kautschukzusammensetzung für einen Reifen gemäß Anspruch 1, worin eine Menge an gebundenem Styrol in dem in Lösung polymerisierten Styrol-Butadien-Kautschuk 5 Gewichts-% oder mehr und 50 Gewichts-% oder weniger beträgt.

3. Die Kautschukzusammensetzung für einen Reifen gemäß Anspruch 2, worin die Menge an gebundenem Styrol in dem in Lösung polymerisierten Styrol-Butadien-Kautschuk 5 Gewichts-% oder mehr und 30 Gewichts-% oder weniger beträgt.

4. Die Kautschukzusammensetzung für einen Reifen gemäß Anspruch 3, worin die Menge an gebundenem Styrol in dem in Lösung polymerisierten Styrol-Butadien-Kautschuk 15 Gewichts-% oder mehr und 30 Gewichts-% oder weniger beträgt.

5. Die Kautschukzusammensetzung für einen Reifen gemäß einem der Ansprüche 1 bis 4, wobei der Anteil an Vinylbindungen der Butadien-Monomereinheiten, die in dem in Lösung polymerisierten Styrol-Butadien-Kautschuk enthalten sind, 40 bis 70 mol% beträgt.

6. Die Kautschukzusammensetzung für einen Reifen gemäß einem der Ansprüche 1 bis 5, worin ein Anteilsverhältnis des Cyclopenten-Ringöffnungspolymers und des in Lösung polymerisierten Styrol-Butadien-Kautschuks, ausgedrückt als ein Gewichtsverhältnis von (Cyclopenten-Ringöffnungspolymer in Lösung polymerisierter Styrol-Butadien-Kautschuk) 5:95 bis 90:10 beträgt.

7. Die Kautschukzusammensetzung für einen Reifen gemäß einem der Ansprüche 1 bis 6, worin das Cyclopenten-Ringöffnungspolymer ein funktionalisierte Endgruppen-enthaltendes Cyclopenten-Ringöffnungspolymer einschließt, in dem an einem Ende einer Polymerkette eine funktionelle Gruppe eingeführt ist.

8. Die Kautschukzusammensetzung für einen Reifen gemäß Anspruch 7, worin das funktionalisierte Endgruppen-enthaltende Cyclopenten-Ringöffnungspolymer eine Oxysilylgruppe als die funktionelle Gruppe an einem Ende einer Polymerkette enthält.

9. Die Kautschukzusammensetzung für einen Reifen gemäß einem der Ansprüche 1 bis 8, worin der in Lösung polymerisierte Styrol-Butadien-Kautschuk ein modifizierter in Lösung polymerisierter Styrol-Butadien-Kautschuk ist, der eine Gruppe enthält, die durch Reaktion von mindestens einer der Verbindungen mit den nachstehenden allgemeinen Formeln (1) bis (3) mit einer Polymerkette eines in Lösung polymerisierten Styrol-Butadien-Kautschuks mit einem aktive Ende eingeführt wurde: 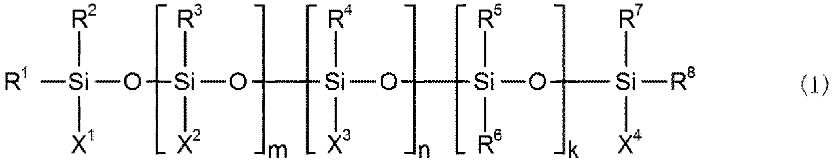 worin in der vorstehenden allgemeinen Formel (1) jeder der Reste R¹ bis R⁸ eine Alkylgruppe mit 1 bis 6 Kohlenstoffatomen oder eine Arylgruppe mit 6 bis 12 Kohlenstoffatomen darstellt, und R¹ bis R⁸ gleich oder voneinander unterschiedlich sein können; jeder der Reste X¹ und X⁴ eine funktionelle Gruppe, die mit dem aktiven Ende der Polymerkette reagieren kann, eine Alkylgruppe mit 1 bis 6 Kohlenstoffatomen, oder eine Arylgruppe mit 6 bis 12 Kohlenstoffatomen darstellt, und X¹ und X⁴ gleich oder voneinander unterschiedlich sein können; X² eine funktionelle Gruppe darstellt, die mit dem aktiven Ende der Polymerkette reagieren kann; X³ eine Gruppe darstellt, die 2 bis 20 wiederkehrende Alkylenglykol-Einheiten enthält und "m" eine ganze Zahl von 3 bis 200 darstellt, "n" eine ganze Zahl ;von 0 bis 200 darstellt und "k" eine ganze Zahl von 0 bis 200 darstellt; 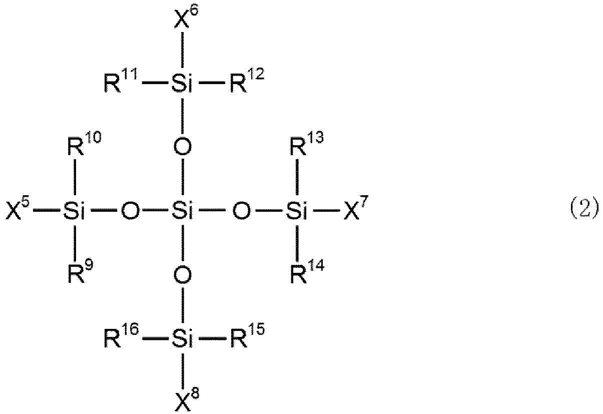 worin in der vorstehenden allgemeinen Formel (2) jeder der Reste R⁹ bis R¹⁶ eine Alkylgruppe mit 1 bis 6 Kohlenstoffatomen oder eine Arylgruppe mit 6 bis 12 Kohlenstoffatomen darstellt, und R⁹ bis R¹⁶ gleich oder voneinander unterschiedlich sein können; und jeder der Reste X⁵ bis X⁸ eine funktionelle Gruppe darstellt, die mit dem aktiven Ende der Polymergruppe reagieren kann; 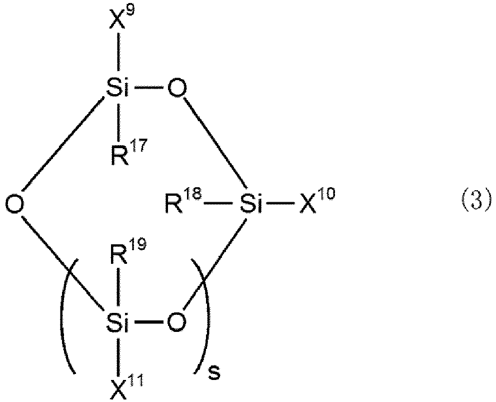 worin in der vorstehenden allgemeinen Formel (3) jeder der Reste R¹⁷ bis R¹⁹ eine Alkylgruppe mit 1 bis 6 Kohlenstoffatomen oder eine Arylgruppe mit 6 bis 12 Kohlenstoffatomen darstellt, und R¹⁷ bis R¹⁹ gleich oder voneinander unterschiedlich sein können; jeder der Reste X⁹ bis X¹¹ eine funktionelle Gruppe darstellt, die mit dem aktiven Ende der Polymerkette reagieren kann; und "s" eine ganze Zahl von 1 bis 18 ist.

10. Die Kautschukzusammensetzung für einen Reifen gemäß einem der Ansprüche 1 bis 9, weiter umfassend ein Siliziumdioxid in einem Verhältnis von 1 Gewichtsteil oder mehr und 200 Gewichtsteilen oder weniger in Bezug auf 100 Gewichtsteile einer Kautschukkomponente, die in der Kautschukzusammensetzung für einen Reifen enthalten ist.

11. Die Kautschukzusammensetzung für einen Reifen gemäß Anspruch 10, weiter umfassend ein Silan-Kupplungsreagenz in einem Verhältnis von 0.1 Gewichtsteilen oder mehr und 30 Gewichtsteilen oder weniger in Bezug auf 100 Gewichtsteile des Siliziumdioxids.

12. Die Kautschukzusammensetzung für einen Reifen gemäß Anspruch 11, worin das Silan-Kupplungsreagenz ein Silan-Kupplungsreagenz ist, das eine Monosulfidgruppe und/oder eine Thiolgruppe einschließt.

13. Die Kautschukzusammensetzung für einen Reifen gemäß Anspruch 1, worin das Cyclopenten-Ringöffnungspolymer ein funktionalisierte Endgruppen-enthaltendes Cyclopenten-Ringöffnungspolymer ist, in dem an einem Ende einer Polymerkette eine funktionelle Gruppe eingeführt ist, eine Menge an gebundenem Styrol in dem in Lösung polymerisierten Styrol-Butadien-Kautschuk 5 bis 35 Gewichts-% beträgt, und in einer Kautschukkomponente, die in der Kautschukzusammensetzung für einen Reifen enthalten ist, ein Anteilsverhältnis des funktionalisierte Endgruppen enthaltenden Cyclopenten-Ringöffnungspolymers 10 bis 55 Gewichts-% beträgt und ein Anteilsverhältnis des in Lösung polymerisierten Styrol-Butadien-Kautschuks 30 bis 75 Gewichts-% beträgt.

14. Die Kautschukzusammensetzung für einen Reifen gemäß Anspruch 13, weiter umfassend zumindest einen Kautschuk, ausgewählt aus Naturkautschuk, Polyisopren-Kautschuk und Polybutadien-Kautschuk.

15. Die Kautschukzusammensetzung für einen Reifen gemäß Anspruch 13 oder 14, weiter umfassend ein Siliziumdioxid in einem Verhältnis von 30 bis 200 Gewichtsteilen in Bezug auf 100 Gewichtsteile der Kautschukkomponente, die in der Kautschukzusammensetzung für einen Reifen enthalten ist.

16. Die Kautschukzusammensetzung für einen Reifen gemäß Anspruch 15, worin eine spezifische Stickstoffadsorptions-Oberfläche des Siliziumdioxids, gemessen anhand der BET-Methode, 100 m²/g oder weniger beträgt.

17. Die Kautschukzusammensetzung für einen Reifen gemäß einem der Ansprüche 13 bis 16, worin das funktionalisierte Endgruppen-enthaltende Cyclopenten-Ringöffnungspolymer eine Oxysilylgrppe als die funktionelle Gruppe an einem Ende einer Polymerkette enthält.

18. Quervernetzter Kautschuk, erhalten durch Quervernetzen der Kautschukzusammensetzung für einen Reifen gemäß einem der Ansprüche 1 bis 17.

19. Reifen, umfassend den quervernetzten Kautschuk gemäß Anspruch 18.

## Revendications

1. Composition de caoutchouc pour un pneu, comprenant un polymère par décyclisation de cyclopentène et un caoutchouc de styrène-butadiène polymérisé en solution, dans laquelle le caoutchouc de styrène-butadiène polymérisé en solution est un caoutchouc de styrène-butadiène polymérisé en solution modifié dans lequel un groupe hydroxyle ou un groupe amino est introduit en tant que groupe modifié.

2. Composition de caoutchouc pour un pneu selon la revendication 1, dans lequel la quantité de styrène lié dans le caoutchouc de styrène-butadiène polymérisé en solution est de 5 % en poids ou plus et de 50 % en poids ou moins.

3. Composition de caoutchouc pour un pneu selon la revendication 2, dans laquelle la quantité de styrène lié dans le caoutchouc de styrène-butadiène polymérisé en solution est de 5 % en poids ou plus et de 30 % en poids ou moins.

4. Composition de caoutchouc pour un pneu selon la revendication 3, dans laquelle la quantité de styrène lié dans le caoutchouc de styrène-butadiène polymérisé en solution est de 15 % en poids ou plus et de 30 % en poids ou moins.

5. Composition de caoutchouc pour un pneu selon l'une quelconque des revendications 1 à 4, dans laquelle la teneur en liaisons vinyle des motifs monomères de butadiène contenus dans le caoutchouc de styrène-butadiène polymérisé en solution est de 40 à 70 % en moles.

6. Composition de caoutchouc pour un pneu selon l'une quelconque des revendications 1 à 5, dans laquelle le rapport en contenu du polymère par décyclisation de cyclopentène au caoutchouc de styrène-butadiène polymérisé en solution, en termes de rapport en poids (polymère par décyclisation de cyclopentène / caoutchouc de styrène-butadiène polymérisé en solution), est de 5/95 à 90/10.

7. Composition de caoutchouc pour un pneu selon l'une quelconque des revendications 1 à 6, dans laquelle le polymère par décyclisation de cyclopentène comprend un polymère par décyclisation de cyclopentène contenant un groupe fonctionnel terminal dans lequel un groupe fonctionnel est introduit à une extrémité d'une chaîne polymère.

8. Composition de caoutchouc pour un pneu selon la revendication 7, dans laquelle le polymère par décyclisation de cyclopentène contenant un groupe fonctionnel terminal contient un groupe oxysilyle en tant que groupe fonctionnel à une extrémité d'une chaîne polymère.

9. Composition de caoutchouc pour un pneu selon l'une quelconque des revendications 1 à 8, dans laquelle le caoutchouc de styrène-butadiène polymérisé en solution est un caoutchouc de styrène-butadiène polymérisé en solution modifié ayant un groupe introduit par la réaction d'au moins l'un des composés représentés par les formules générales (1) à (3) qui suivent avec une chaîne polymère d'un copolymère de styrène-butadiène polymérisé en solution ayant une extrémité active : 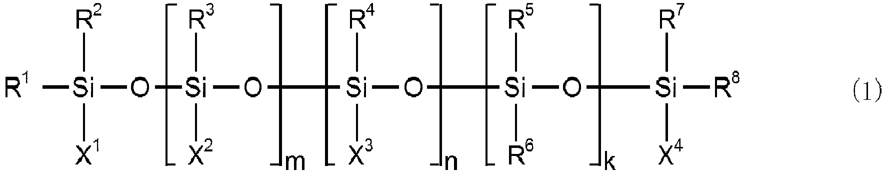 où, dans la formule générale (1) ci-dessus, chacun de R¹ à R⁸ représente un groupe alkyle ayant 1 à 6 atomes de carbone ou un groupe aryle ayant 6 à 12 atomes de carbone, et R¹ à R⁸ peuvent être identiques ou différents ; chacun de X¹ et X⁴ représente un groupe fonctionnel capable de réagir avec l'extrémité active de la chaîne polymère, un groupe alkyle ayant 1 à 6 atomes de carbone, ou un groupe aryle ayant 6 à 12 atomes de carbone, et X¹ et X⁴ peuvent être identiques ou différents ; X² représente un groupe fonctionnel capable de réagir avec l'extrémité active de la chaîne polymère ; X³ représente un groupe contenant 2 à 20 motifs répétitifs alkylèneglycol ; et "m" est un entier de 3 à 200, "n" est un entier de 0 à 200, et "k" est un entier de 0 à 200 ; 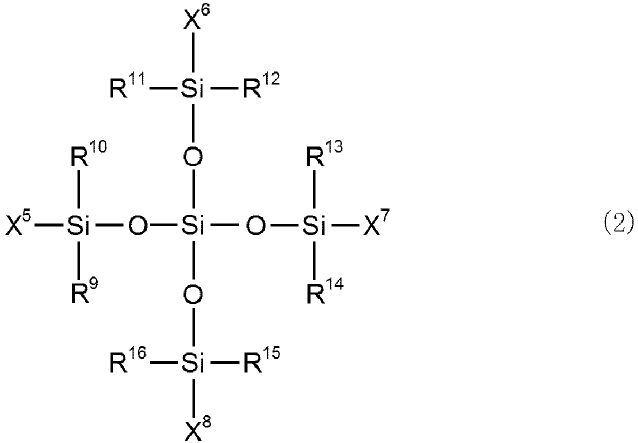 où, dans la formule générale (2) ci-dessus, chacun de R⁹ à R¹⁶ représente un groupe alkyle ayant 1 à 6 atomes de carbone ou un groupe aryle ayant 6 à 12 atomes de carbone, et R⁹ à R¹⁶ peuvent être identiques ou différents ; et chacun de X⁵ à X⁸ représente un groupe fonctionnel capable de réagir avec l'extrémité active de la chaîne polymère ; 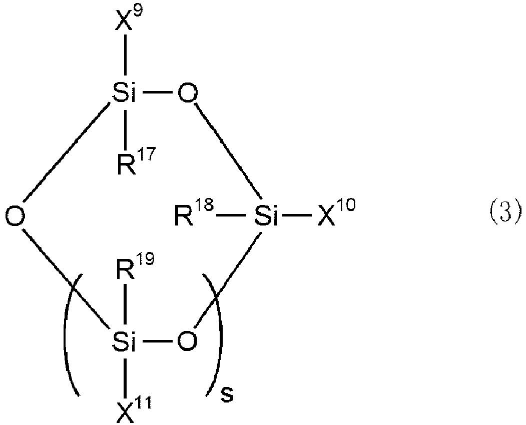 où, dans la formule générale (3) ci-dessus, chacun de R¹⁷ à R¹⁹ représente un groupe alkyle ayant 1 à 6 atomes de carbone ou un groupe aryle ayant 6 à 12 atomes de carbone, et R¹⁷ à R¹⁹ peuvent être identiques ou différents ; chacun de X⁹ à X¹¹ représente un groupe fonctionnel capable de réagir avec l'extrémité active de la chaîne polymère ; et "s" est un entier de 1 à 18.

10. Composition de caoutchouc pour un pneu selon l'une quelconque des revendications 1 à 9, comprenant en outre une silice en une proportion de 1 partie en poids ou plus et de 200 parties en poids ou moins pour 100 parties en poids d'un composant caoutchouc contenu dans la composition de caoutchouc pour un pneu.

11. Composition de caoutchouc pour un pneu selon la revendication 10, comprenant en outre un agent de couplage au silane en une proportion de 0,1 partie en poids ou plus et de 30 parties en poids ou moins pour 100 parties en poids de la silice.

12. Composition de caoutchouc pour un pneu selon la revendication 11, dans lequel l'agent de couplage au silane est un agent de couplage au silane contenant un groupe monosulfure et/ou un groupe thiol.

13. Composition de caoutchouc pour un pneu selon la revendication 1, dans laquelle
le polymère par décyclisation de cyclopentène est un polymère par décyclisation de cyclopentène contenant un groupe fonctionnel terminal dans lequel un groupe fonctionnel est introduit à une extrémité d'une chaîne polymère,
la quantité de styrène lié dans le caoutchouc de styrène-butadiène polymérisé en solution est de 5 à 35 % en poids, et
dans un composant caoutchouc contenu dans la composition de caoutchouc pour un pneu, la proportion en contenu du polymère par décyclisation de cyclopentène contenant un groupe fonctionnel terminal est de 10 à 55 % en poids et la proportion en contenu du caoutchouc de styrène-butadiène polymérisé en solution est de 30 à 75 % en poids.

14. Composition de caoutchouc pour un pneu selon la revendication 13, comprenant en outre au moins un caoutchouc choisi parmi le caoutchouc naturel, le caoutchouc de polyisoprène et le caoutchouc de polybutadiène.

15. Composition de caoutchouc pour un pneu selon la revendication 13 ou 14, comprenant en outre une silice en une proportion de 30 à 200 parties en poids pour 100 parties en poids du composant caoutchouc contenu dans la composition de caoutchouc pour un pneu.

16. Composition de caoutchouc pour un pneu selon la revendication 15, dans laquelle la surface spécifique d'adsorption d'azote de la silice, mesurée par une méthode BET, est de 100 m²/g ou moins.

17. Composition de caoutchouc pour un pneu selon l'une quelconque des revendications 13 à 16, dans laquelle le polymère par décyclisation de cyclopentène contenant un groupe fonctionnel terminal contient un groupe oxysilyle en tant que groupe fonctionnel à une extrémité d'une chaîne polymère.

18. Caoutchouc réticulé obtenu par réticulation de la composition de caoutchouc pour un pneu selon l'une quelconque des revendications 1 à 17.

19. Pneu comprenant le caoutchouc réticulé de la revendication 18.
